Europäisches Patentamt

European Patent Office

Office européen des brevets

(19)

(11) **EP 1 571 595 A2**

(12) **EUROPEAN PATENT APPLICATION**

(43) Date of publication:
**07.09.2005 Bulletin 2005/36**

(51) Int Cl.⁷: **G06T 7/40**, H04N 5/14,
H04N 7/50

(21) Application number: **05251305.8**

(22) Date of filing: **04.03.2005**

| | |
|---|---|
| (84) Designated Contracting States:<br>**AT BE BG CH CY CZ DE DK EE ES FI FR GB GR**<br>**HU IE IS IT LI LT LU MC NL PL PT RO SE SI SK TR**<br>Designated Extension States:<br>**AL BA HR LV MK YU**<br><br>(30) Priority: **05.03.2004 KR 2004014952**<br><br>(71) Applicant: **SAMSUNG ELECTRONICS CO., LTD.**<br>**Gyeonggi-do (KR)** | (72) Inventors:<br>• **Moon, Youngsu**<br>  **Seoul (KR)**<br>• **Kim, Jiyeun**<br>  **Soeul (KR)**<br><br>(74) Representative: **Greene, Simon Kenneth**<br>**Elkington and Fife LLP,**<br>**Prospect House,**<br>**8 Pembroke Road**<br>**Sevenoaks,**<br>**Kent TN13 1XR (GB)** |

(54) **Method of and apparatus for detecting video shot changes in a moving picture**

(57)     A method of and an apparatus for detecting video shot changes in a moving picture are provided. The method comprises operations of: (a) examining whether or not there is a video shot change with respect to first through Kth (herein, K is a positive integer larger than 1) upper layer frame groups formed by combining video frames of a moving picture, first through Mth (herein, M is a positive integer larger than 1) middle layer frame groups formed by combining video frames in an Lth (herein, L is a positive integer larger than 1 and smaller than K) upper layer frame group of the first through Kth upper layer frame groups, and an Nth (herein, N is a positive integer larger than 1 and smaller than M) lower layer frame group in the Nth middle layer frame group of the first through Mth middle layer frame groups; and (b) generating a video shot change list by using the result of the operation (a). Accordingly, it is possible to detect video shot changes faster because the compressed stream data of the moving picture are processed distinctively and hierarchically, to prevent errors in detecting shot changes caused by light changes because the normalized correlation coefficient as well as the differential characteristic value based on color distribution is used as a detection characteristic value, and to effectively detect shot changes with respect to analogous color distributions

FIG. 1

EP 1 571 595 A2

FIG. 2

SECOND MIDDLE
LAYER FRAME
GROUP

FOURTH MIDDLE
LAYER FRAME
GROUP

FIRST HIGHEST LAYER FRAME GROUP

FIRST MIDDLE
LAYER FRAME
GROUP

THIRD MIDDLE
LAYER FRAME
GROUP

FIFTH MIDDLE
LAYER FRAME
GROUP

$\cdots B\,I_1\,B\,B\,P_1\,B_1\,B_2\,P_2\,B\,B\,P_3\,B\,B\,P_4\,B\,B\,I_2\,B\,B\,P\,B\,B\,P\,B\,B\,P\,B\,B\,P\,B\,B\,I_3\,B \cdots$

FIRST UPPER LAYER FRAME GROUP

SECOND UPPER LAYER FRAME GROUP

**Description**

The present invention relates to detection of video shot changes in moving picture data, and more particularly, to a method of detecting video shot changes in a moving picture by classifying video frames in units of multi-layer hierarchical streams and detecting the video shot changes with a high speed in order to rapidly index contents of the moving picture, and an apparatus using the same.

A video shot is a set of video frames captured continuously by a single camera movement while shooting a video, and is used as a basic processing unit when indexing the video by theme. Techniques for detecting video shot changes are important in video indexing. Information on the video shot boundaries is fundamental segment data used when organizing a table of content based on video contents, implementing a function of summarizing video contents, or editing the video by theme.

Such techniques for detecting video shot changes in order to provide information on the video shot boundaries can be classified mostly into a compressed domain detection technique and a non-compressed domain (or pixel domain) detection technique. Initially, the non-compressed domain technique which handles a variety of pixel domain image features has been frequently used. However, recently the compressed domain approaches which partially decode the compressed video stream and then utilize some type of stream data like the DCT (Discrete Cosine Transform) coefficients, motion vectors, macro-block mode and bit rate allocations are being widely developed to speed up the change detection task for the video contents stored in compressed format.

According to a conventional procedure of detecting video shot changes, differential characteristic values between neighboring frames are calculated for each frame as a detection measure value. Mainly, the differences between the color histograms of subsequently neighboring frames are used. Then, the differential characteristic value is compared with a predetermined threshold value to determine whether or not any video shot change takes place in the current frame. In the case of the compressed domain methods, most of the detection measures are calculated directly from the partial decoded stream data of the DCT (Discrete Cosine Transform) coefficients, motion vectors, macro-block mode and bit rate allocations. Therefore, it is possible to quickly carry out the shot change detection without full decompression.

However, conventional shot change detection techniques on the compressed or the non-compressed domain generally have the following limitation.

First, the frames corresponding to video shot changes in a video may be below 1% rate of all the entire video frames . Nevertheless, the most video shot change detection techniques are repeated at every frame or at every other frame with certain frame skip length. Accordingly, the computational load of such detection schemes is very large inefficiently , thereby not permitting the improvement of the processing speed. In order to improve the detection speed, some compressed domain detection method calculates the detection measure value between subsequent intra-coded frames in the compressed stream data, which generally belong to the first frame in each GOP (Group of Pictures) stream unit being conventionally composed of about 15 frames. The existence of an intra coded frame in a GOP stream unit enables to randomly access a compressed video stream in GOP units. More specifically, by comparing the detection measure calculated at every GOP stream unit to a given threshold value, a decision on whether the current GOP stream unit have a video shot change in itself or not is made. Next, all the video frames within the current GOP stream unit which was declared as a shot change candidate GOP unit is tested for the possibility of being shot change frame. Furthermore, to cover such a video shot change detection, which is more specifically classified as a cut or a GT (Gradual Transition), two different detection measure values needs to be calculated at each frame. In detail, for the good detection of a cut type of shot change indicating a non-overlap linking of two subsequent video camera shots, a detection measure calculated in two subsequent frames of relatively short frame distance (e.g., 1 frame) is adequate, while in the case of a GT type of shot change representing a partially overlapped linking of two subsequent video camera shots, another detection measure between two subsequent frames of relatively long frame distance (e.g., 15 ~ 45 frames) should be calculated. These factors of the above detection method acts as interference in improving the detection speed.

Secondly, a conventional approach employing a color histogram difference as a main detection measure reveals the limitation on the shot change detection between temporally neighboring video shots with similar color distributions. Besides, in news video or music videos where a type of significant illumination change such as a flashlight frequently is observed, a number of false shot changes are detected around the video frames with flashlight. To recover the problem, some previous work has presented some separate preprocessing stages, such as a separate flashlight detection module or a complicated process for image illumination compensation.

According to an aspect of the present invention, there is provided a method of detecting video shot changes in a moving picture, the method comprising the operations of: (a) examining whether or not there is a video shot change with respect to first through Kth (herein, K is a positive integer larger than 1) upper layer frame groups formed by combining video frames of a moving picture, first through Mth (herein, M is a positive integer larger than 1) middle layer frame groups formed by combining video frames in an Lth (herein, L is a positive integer larger than 1 and smaller than K) upper layer frame group of the first through Kth upper layer frame groups, and an Nth (herein, N is a positive integer larger than 1 and smaller than M) lower layer frame group in the Nth middle layer frame group of the first through Mth middle layer frame groups; and (b) generating a video shot change list by using result of the operation (a).

According to another aspect of the present invention, there is provided an apparatus for detecting video shot changes of a moving picture, the apparatus comprising: a shot change examination unit which examines video shot changes with respect to first through Kth (herein, K is a positive integer larger than 1) upper layer frame groups formed by combining video frames of the moving picture, first through Mth (herein, M is a positive integer larger than 1) middle layer frame groups formed by combining the video frames in an Lth (herein, L is a positive integer larger than 1 and smaller than K) upper layer frame group among the first through Kth upper layer frame groups, and an Nth (herein, N is a positive integer larger than 1 and smaller than M) lower layer frame group of the Nth middle layer frame group among the first through Mth middle layer frame groups; and a shot change list generating unit which generates a shot change list of the examined video.

The present invention provides a method of detecting video shot changes of a moving picture, in which the compressed video stream data of the moving pictures can be divided in multi-level stream units and then only some stream groups examined as having the shot change possibility are applied to a hierarchical shot change detection process.

Also, the present invention provides an apparatus for detecting video shot changes of a moving picture, in which the compressed video stream data of the moving pictures can be divided in multi-level stream units and then only some stream groups examined as having the shot change possibility are applied to a hierarchical shot change detection process.

The above and other features and advantages of the present invention will become more apparent by describing in detail exemplary embodiments thereof with reference to the attached drawings in which:

FIG. 1 is a flow chart describing a method of detecting video shot changes in a moving picture according to an embodiment of the present invention;

FIG. 2 is a schematic diagram showing an example of a video stream data frame grouping;

FIG. 3 is a flow chart describing an operation 10A in FIG. 1 according to an embodiment of the present invention;

FIG. 4 is flow chart describing an operation 32 in FIG. 3 according to an embodiment of the present invention;

FIG. 5 is a flow chart describing the operation 42 in FIG. 3 according to an embodiment of the present invention;

FIG. 6 is a flow chart describing the operation 56 in FIG. 3 according to an embodiment of the present invention;

FIG. 7 is a flow chart describing the operation 158 in FIG. 6 according to an embodiment of the present invention;

FIG. 8 is a flow chart describing the operation 60 in FIG. 3 according to an embodiment of the present invention;

FIG. 9 is a flow chart describing the operation 184 in FIG. 8 according to an embodiment of the present invention;

FIG. 10 is a flow chart describing the operation 186 in FIG. 8 according to an embodiment of the present invention;

FIG. 11 is a flow chart describing the operation 10 in FIG. 1 according to another embodiment of the present invention;

FIG. 12 is a block diagram showing an apparatus for detecting video shot changes in a moving picture according to an embodiment of the present invention;

FIG. 13 is a block diagram showing a shot change detection unit according to an embodiment of the present invention;

FIG. 14 is a block diagram showing a third shot change possibility examination unit 502 according to an embodiment of the present invention;

FIG. 15 is a block diagram showing a first shot change possibility examination unit 508 in FIG. 13 according to an embodiment of the present invention;

FIG. 16 is a block diagram showing a second shot change possibility examination unit 518 in FIG. 13 according to an embodiment of the present invention;

FIG. 17 is a block diagram showing a fourth shot change possibility examination unit 648 in FIG. 16 according to an embodiment of the present invention;

FIG. 18 is a block diagram showing a cut type change examination unit 520 in FIG. 13 according to an embodiment of the present invention;

FIG. 19 is a block diagram showing a second cut type frame determination unit 804 in FIG. 18 according to an embodiment of the present invention;

FIG. 20 is a block diagram showing a second cut type change frame determination unit 804 in FIG. 18 according to another embodiment of the present invention; and

FIG. 21 is a block diagram showing a shot change examination unit 400 in FIG. 12 according to another embodiment of the present invention

The present invention will now be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art. Like reference numerals in the drawings denote like elements, and thus their description will be omitted.

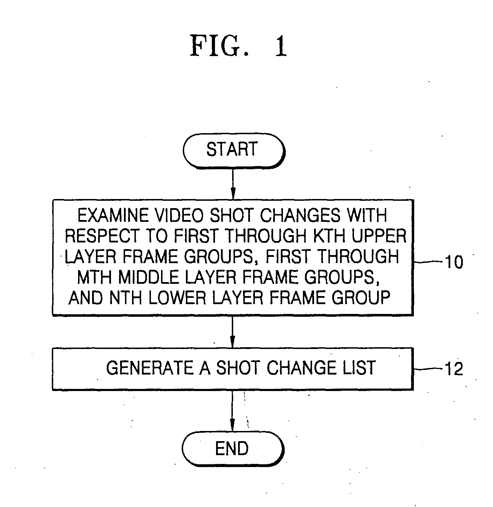

Referring to FIG. 1, a method of detecting video shot changes in a moving picture according to an embodiment of the present invention comprises operations 10 and 12 of examining whether or not there is a video shot change and then generating a shot change list.

First, detection of a video shot change is carried out with respect to first through Kth (herein, K is a positive integer larger than 1) upper layer frame groups formed by combining video frames of a moving picture, first through Mth (herein, M is a positive integer larger than 1) middle layer frame groups formed by combining video frames in an Lth (herein, L is a positive integer larger than 1 and smaller than or equal to K) upper layer frame group among the first through Kth upper layer frame groups, and an Nth lower layer frame group formed by combining video frames in an Nth (herein, N is a positive integer larger than 1 and smaller than or equal to M) middle layer frame group among the first through Mth middle layer frame groups (operation 10). The first through Kth upper layer frame groups are group-of-pictures (GOPs) containing intra frames, forward prediction frames, and bidirectional prediction frames. The GOP is composed of a group of frames extending from an intra frame to a next intra frame, and functions as a smallest independent picture unit which is arbitrarily accessible.

Also, it is preferable to detect the video shot change with respect to highest layer frame groups which are higher than the first through Kth upper layer frame groups.

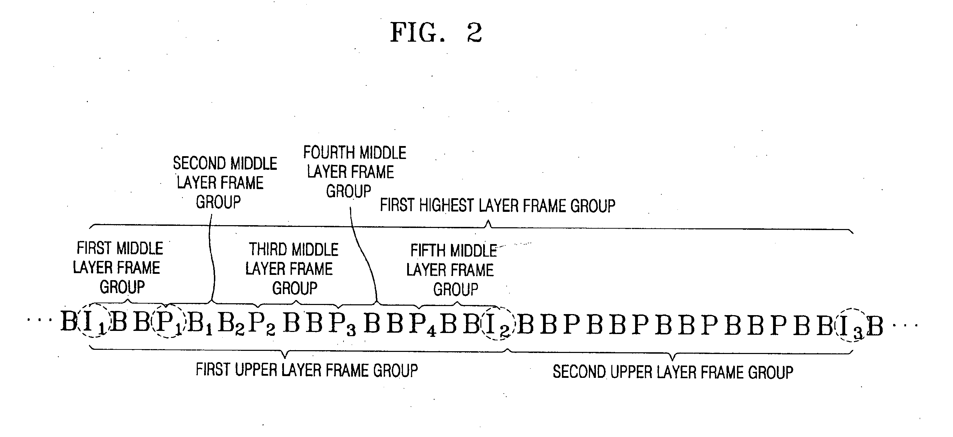

Referring to FIG. 2, the highest layer frame group is formed by combining two upper layer frame groups into one frame group. Each of the upper layer frame groups is divided into a plurality of middle layer frame groups. Similarly, each of the middle layer groups is divided into a plurality of lower layer frame groups. As shown in FIG. 2, the first highest layer frame group includes intra frames ($I_1$ and $I_3$) at both ends, and the first and second upper layer frame groups also include intra coded frame sets ($I_1$ and $I_2$) and ($I_2$ and $I_3$) at both ends, respectively Herein, it is shown that two upper layer frame groups are included in the first highest layer frame group. However, three upper layer frame groups can be included in the first highest layer frame group. The first upper layer frame group also includes the first through fifth middle layer frame groups, which are represented by the following five boundary frame sets of ($I_1$ and $P_1$), ($P_1$ and $P_2$), ($P_2$ and $P_3$), ($P_3$ and $P_4$), ($P_4$ and $I_2$), respectively. It is shown that each of the middle layer frame groups includes two bidirectional prediction frames between intra frames or forward prediction frames. However, a predetermined number of bidirectional prediction frames can be included. Herein, it is shown that the individual bidirectional prediction frame functions as a unit frame of the lower layer frame group. Note that as the depicted sequential frames are arranged in video playing order instead video encoding order, for more easy explanation, the hierarchical frame grouping in the above should be a little differently implemented for a real compressed video stream data.

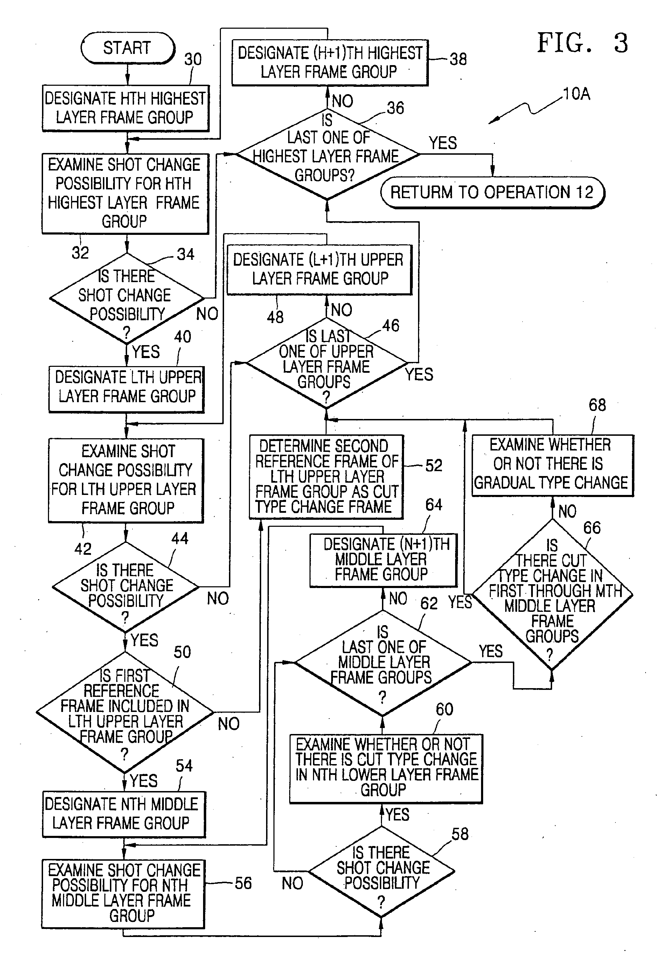

Referring to FIG. 3, the operation 10 comprises operations 30 through 68 of examining whether or not there is a cut type change or a gradual type change in the unit of a frame by performing hierarchical shot change detection processes with respect to multi-layer frame groups.

First, an Hth (herein, H is a positive integer larger than 1 and smaller than or equal to G) highest layer group is designated among first through Gth (herein, G is a positive integer larger than 1) highest layer frame groups formed by combining a predetermined number of upper layer frame groups among the first through Kth upper layer frame groups (operation 30). For example, if a moving picture is composed of the first through Gth highest layer frame groups, the first through Gth highest frame groups are sequentially designated.

After the operation 30, a shot change possibility is examined with respect to the Hth highest layer frame group (operation 32). Herein, the shot change possibility denotes probability that a frame or frames experiencing a shot change can be included in a frame group. As described above, the shot changes are classified into a cut type change and a gradual type change. The cut type change refers to an abrupt change between neighboring video camera shots, and the gradual type change refers to a smooth or progressive change between neighboring video camera shots. If it is determined that any one of the cut type change and the gradual type change can take place, it is determined that the shot change is possible.

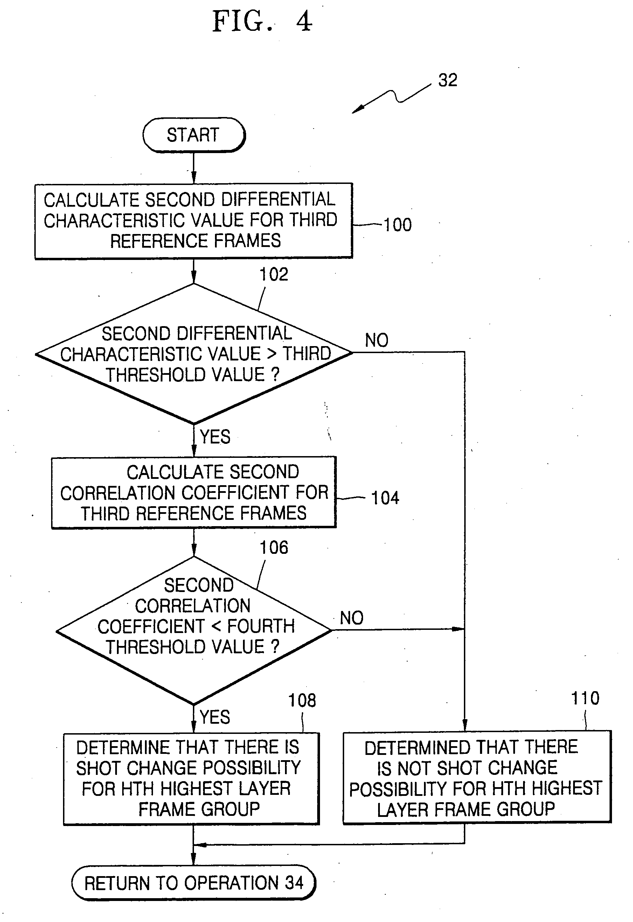

Referring to FIG. 4, the operation 32 comprises operations 100 through 110 of determining a shot change possibility by using a second differentiation characteristic value and a second correlation coefficient calculated with respect to a third reference frames. In common a reference frame refers to an intra coded frame or forward prediction frame in video compression community.

First, a second differential characteristic value based on color histogram is calculated with respect to the third reference frames positioned at both ends of the Hth highest layer frame group (operation 100). Particularly, the third reference frames are intra frames. For example, as shown in FIG. 2, a second differential characteristic value is calculated from two color histograms with respect to the first and the third intra frames I1 and I3 positioned at both ends of the first highest frame group. The following equation is used to calculate the second differential characteristic value.

[Equation 1]

$$\left| \Delta F_{ij} \right| = \frac{1}{A} \sum_{k=1}^{n} \left| F_i(k) - F_j(k) \right|$$

where, the subscripts $i$ and $j$ represent frames positioned at both ends of the highest layer frame group;

$F$ represents a color histogram of the designated frames;

$k$ represents a bin number of the color histogram;

$n$ represents a total number of bins in the color histogram; and

$A$ represents an image size of the designated frames.

The result of Equation 1 is used as a differential characteristic value for determining similarity of color distributions between the two reference pictures. As the differential characteristic value is closer to 0, the two pictures are regarded as being more similar with each other in color distribution, so that a stream frame unit (or group) defined by such two pictures is thought to have a smaller shot change possibility. On the contrary, as the differential characteristic value becomes larger from 0, the shot change possibility of the stream frame unit defined by the two pictures is thought to be smaller.

After the operation 100, the calculated second differential characteristic value is compared with a predetermined third threshold value (operation 102). If the second differential characteristic value calculated by Equation 1 is not larger than the third threshold value, an operation 110 which will be described below is carried out.

However, if the calculated second differential characteristic value is larger than the third threshold value, a second correlation coefficient normalized with respect to the third reference frames is calculated (operation 104). The following equation is used to calculate a second normalized correlation coefficient which is used to prevent false detection caused by an illumination change, especially such as flashlight.

[Equation 2]

$$\gamma_{ij} = \frac{1}{m} \sum_{p=1}^{m} \left[ \frac{\left(D_i(p) - B_i\right)\left(D_j(p) - B_j\right)}{E_i \cdot E_j} \right]$$

where, the subscripts $i$ and $j$ represent (reference) frames positioned at both ends of the highest layer frame group;

$p$ represents a pixel location;

$m$ represents a total number of picture frame pixels;

$Di(p)$ and $Dj(p)$ represent brightness values of the $p$ pixel in $i$ and $j$ frames;

$B_i$ and $B_j$ represent averages of brightness values of $i$ and $j$ frames; and

$E_i$ and $E_j$ are standard deviations of brightness values in $i$ and $j$ frames.

The normalized correlation coefficients calculated by Equation 2 are distributed between -1 and 1. As the estimated correlation coefficient becomes closer to 1, the possibility that the shot change takes place in the stream unit defined by the two pictures becomes lower. On the contrary, as the correlation coefficient is closer to -1, the shot change possibility becomes higher. Such a correlation coefficient is much more robust against illumination change in comparison with the differential characteristic value based on the color distribution.

After the operation 104, the second correlation coefficient obtained by Equation 2 is compared with a predetermined fourth threshold value (operation 106). If the second correlation coefficient is not smaller than the fourth threshold value as a result of comparison, an operation 110 is carried out as described below.

However, if the calculated second correlation coefficient is smaller than the fourth threshold value, it is determined that there is a shot change possibility with respect to the Hth highest layer frame group (operation 108).

Meanwhile, if the second differential characteristic value is not larger than the third threshold value as a result of the operation 102, or if the second correlation coefficient is not smaller than the fourth threshold value as a result of the operation 106, it is determined that there is no shot change possibility with respect to the Hth highest layer frame group (operation 110). No shot change possibility means that there is no frame or no frame block in which a cut type change or a gradual type change takes place in the Hth highest layer frame group.

After the operation 32, it is determined whether or not there is a shot change possibility with respect to the Hth highest layer frame group based on the result of the operation 32 (operation 34). If the shot change possibility with respect to the Hth highest layer frame group exists, the operation 40 is carried out.

However, if the shot change possibility with respect to the Hth highest layer frame group does not exist, it is determined whether or not the Hth highest layer frame group is the last one of the first through Gth highest layer frame groups (operation 36). In other words, there is no highest layer frame group to be examined.

If the Hth highest layer frame group is not the last one of the first through Gth highest layer frame groups, an (H+1)th (herein, H+1 is a positive integer larger than 1 and smaller than or equal to G) highest layer frame group is designated, and the operation 32 is carried out (operation 38). If the (H+1)th highest layer frame group is designated, a shot change possibility is examined with respect to the (H+1)th highest layer frame group in the operation 32.

However, if the Hth highest layer frame group is the last one of the first through Gth highest layer frame groups, the operation 12 is carried out as described below. If the Hth highest layer frame group is the last one of the highest layer frame groups, the operation 12 is carried out because there is no highest layer frame group to be examined.

In the operation 34, if there is a shot change possibility with respect to the Hth highest layer frame group, the Lth upper layer frame group is designated (operation 40). As described above, the Lth upper layer frame group is a type of GOP structure. Among the first through Kth upper frame groups included in the Hth highest layer frame group, the designation of the Lth upper layer frame group is started from a first upper layer frame group in the order of frame positions.

After the operation 40, the shot change possibility is examined with respect to the Lth upper layer frame group (operation 42).

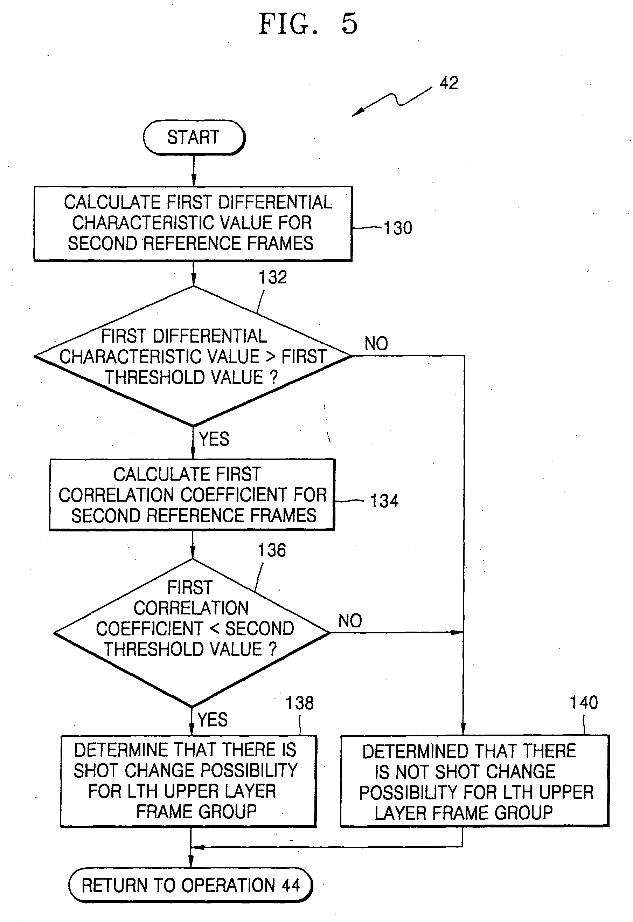

Referring to FIG. 5, the operation 42 comprises operations 130 through 140 of examining a shot change possibility by using the calculated first correlation coefficient and the calculated first differential characteristic value with respect to the second reference frames.

First, the first differential characteristic value based on color histogram is calculated with respect to the second reference frames positioned at both ends of the Lth upper layer frame group (operation 130). Similarly to the third reference frames, the second reference frames are intra frames. For example, as shown in FIG. 2, the second reference frames of the first upper layer frame group are a first intra frame I1 and a second intra frame I2. The first differential characteristic value can be obtained from Equation 1.

After the operation 130, the obtained first differential characteristic value is compared with a predetermined threshold value (operation 132). If the first differential characteristic value is not larger than the first threshold value as a result of comparison, an operation 140 is carried out as described below.

However, if the obtained first differential characteristic value is larger than the first threshold value, a normalized first correlation coefficient is calculated with respect to the second reference frames (operation 134). The first correlation coefficient can be obtained from Equation 2.

After the operation 134, the obtained first correlation coefficient is compared with a predetermined second threshold value (operation 136). If the first correlation coefficient is not smaller than the second threshold value as a result of comparison, the operation 140 is carried out as described below.

However, the obtained first correlation coefficient is smaller than the second threshold value, it is determined that there is a shot change possibility with respect to the Lth upper layer frame group (operation 138).

Meanwhile, if the first differential characteristic value is not larger than the first threshold value as a result of comparison in the operation 132, or if the first correlation coefficient is not smaller than the second threshold value as a result of comparison in the operation 136, it is determined that there is no shot change possibility with respect to the Lth upper layer frame group (operation 140).

After the operation 42, it is determined whether or not there is a shot change possibility with respect to the Lth upper layer frame group (operation 44) by using the result of the operation 42. If the shot change possibility with respect to the Lth upper layer frame group exists, an operation 50 is carried out as described below.

However, if the shot change possibility with respect to the Lth upper layer frame group does not exist, it is determined whether or not the Lth upper layer frame group is the last one of the first through Kth upper layer frame groups (operation 46). In other words, there is no upper layer frame group to be examined.

If the Lth upper layer frame group is not the last one of the first through Kth upper layer frame groups, an (L+1)th (herein, (L+1) is a positive integer larger than 1 and smaller than or equal to K) upper layer frame group is designated, and the operation 42 is carried out (operation 48).

However, if the Lth upper layer frame group is the last one of the first through Kth upper layer frame groups, the operation 36 is carried out. This is because there is no upper layer frame group to be examined in the Hth highest layer frame group. Therefore, in order to examine other highest layer frame groups, the operation 36 is carried out.

In the operation 44, if a shot change possibility with respect to the Lth upper layer frame group exists, it is determined whether or not one or more first reference frames, which divide the Lth upper layer frame group into the first through Mth middle layer frame groups, is included in the Lth upper layer frame group (operation 50). Particularly, the first reference frames are forward prediction frames. As shown in FIG. 2, it is recognized that the first reference frames P1, P2, P3, and P4 corresponding to the forward prediction frames are included in the first upper layer frame group. Finally, the first through fifth middle layer frames are formed based on such first reference frames P1, P2, P3, and P4.

If there is one or more first reference frames in the Lth upper layer frame group, the operation 54 is carried out.

However, if no first reference frame is included in the Lth upper layer frame group, second one of the second reference frames positioned at both ends of the Lth upper layer frame group is determined to be a cut type change frame corresponding to an abrupt change of a video shot, and then the operation 46 is carried out (operation 52). If there is no forward prediction frame in the Lth upper layer frame group which determines that there is a shot change possibility in the operation 44, it is determined that there is a cut type change.

In the operation 50, if there is the first reference frame in the Lth upper layer frame group, the Nth middle layer frame group is designated in order to examine a video shot change (operation 54). If the first reference frame is included in the Lth upper layer frame group, it is determined that there are middle layer frame groups which divide the Lth upper layer frame group. In this case, a sequential designation is carried out from the preceded middle layer frame group among frames in the Lth upper layer frame group.

After the operation 54, a shot change possibility is examined with respect to the Nth middle layer frame group (operation 56).

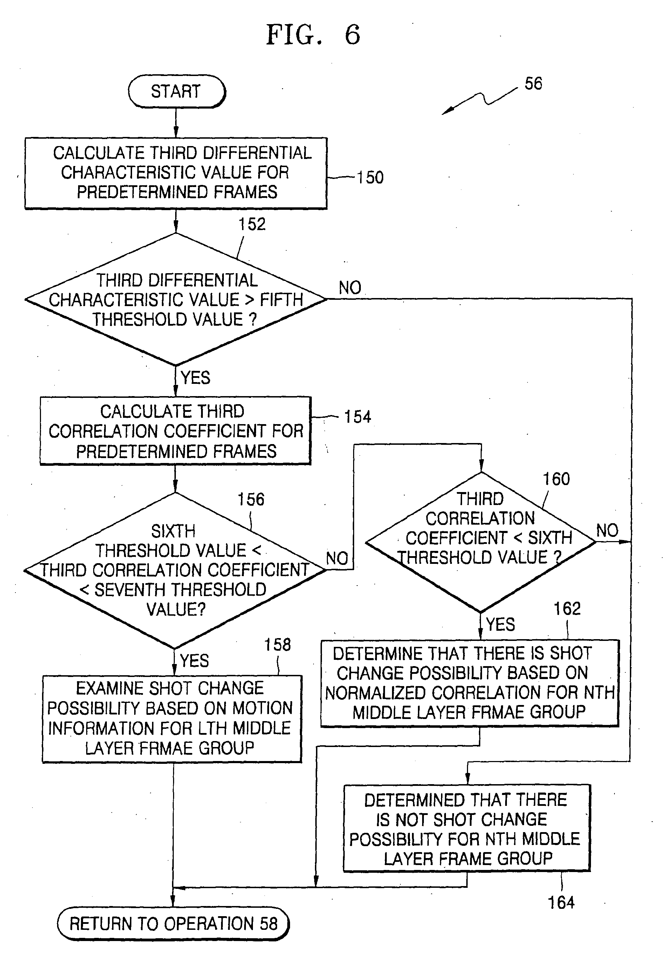

Referring to FIG. 6, the operation 56 comprises operations 150 through 164 of examining a shot change possibility by using a third correlation coefficient and a third differential characteristic value calculated with respect to predetermined frames.

First, a third differential characteristic value based on color histogram is calculated with respect to predetermined frames positioned at both ends of the Nth middle layer frame group (operation 150). The predetermined frames can be intra frames or forward prediction frames. As shown in FIG. 2, the third differential characteristic value of the predetermined frames P1 and P2 positioned at both ends of the second middle layer frame group in the first upper layer frame group is calculated. The third differential characteristic value is calculated by using Equation 1.

After the operation 150, the calculated third differential characteristic value is compared with a predetermined fifth threshold value (operation 152). If the third characteristic value is not larger than the fifth threshold value as a result of comparison, an operation 164 is carried out as described below.

However, if the obtained third differential characteristic value is larger than the fifth threshold value, a normalized third correlation coefficient with respect to the predetermined frames is calculated (operation 154). The third correlation coefficient is calculated by using Equation 2.

After the operation 154, it is determined whether or not the obtained third correlation coefficient is between a predetermined sixth threshold value and a predetermined seventh threshold value (operation 156).

If the obtained third correlation coefficient is between the sixth threshold value and the seventh threshold value, a shot change possibility is examined with respect to the Nth middle layer frame group based on motion information (operation 158). A motion vector prediction is carried out for each block of the corresponding frame in order to accomplish video compression based on a motion compensation technique. In this case, whether or not a motion vector prediction should be carried out is determined according to whether or not there is a shot change in the corresponding frame. If a prediction mode should be carried out, it is determined which mode should be used to accomplish the motion vector prediction among a forward prediction mode, a reverse prediction mode, and a bidirectional prediction mode. In other words, it is possible to indirectly determine whether or not there is a shot change by examining a motion vector prediction for each block in stream data of the frames compressed by the motion compensation and a proportion of each prediction mode. In other words, among macro blocks in the motion prediction frames, if the number of an intra mode is larger than the number of a motion prediction mode (for example, a forward prediction mode, a reverse prediction mode, and a bidirectional mode), this means that a shot change possibility becomes higher.

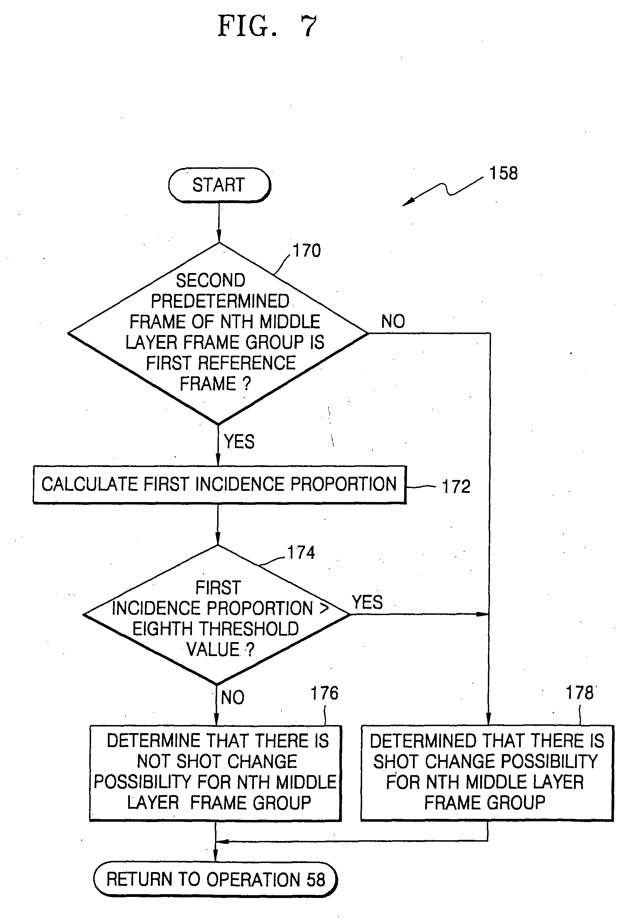

Referring to FIG. 7, the operation 158 comprises operations 170 through 178 of examining a shot change possibility with respect to the Nth middle layer frame group based on a first incidence proportion calculated with respect to the first reference frame in the Nth middle layer frame group.

First, it is determined whether or not second one of predetermined frames positioned at both ends of the Nth middle layer frame group is one of the first reference frames (operation 170). As described above, the predetermined frames can be intra frames or forward prediction frames. Then, it is determined whether or not the secondly positioned one of the predetermined frames is a forward prediction frame corresponding to the first reference frame. If the secondly positioned one of the predetermined frames is not the first reference frame, the operation 178 is carried out.

However, if the secondly positioned one of the predetermined frames is the first reference frame, a first incidence proportion is calculated (operation 172). The first incidence proportion is a proportion of an incidence of the intra mode to an incidence of the forward prediction mode. The incidence of the intra mode represents how many macro blocks with the intra mode exist in the first reference frame, that is, the forward prediction frame. The incidence of the forward prediction mode represents how many macro blocks with the forward prediction mode exist in the first reference frame, that is, the forward prediction frame. The first incidence proportion can be obtained from the following equation.

[Equation 3]

$$R1 = S1/T1,$$

where, R1 is the first incidence proportion;
S1 is the incidence of the intra mode; and
T1 is an incidence of the forward prediction mode.

After the operation 172, the obtained first incidence proportion is compared with a predetermined eighth threshold value (operation 174). If the first incidence proportion is larger than the eighth threshold value, the operation 178 is carried out.

On the contrary, if the obtained first incidence proportion is not larger than the eighth threshold value, it is determined that there is no shot change possibility with respect to the Nth middle layer frame group (operation 176).

If the second one of the predetermined frames is not the first reference frame as a result of the operation 170, or if the first incidence proportion is larger than the eighth threshold value as a result of the operation 174, it is determined that there is a shot change possibility based on motion information with respect to the Nth middle layer frame group (operation 178).

If it is determined that the third correlation coefficient is not between the sixth and the seventh threshold values as a result of the operation 156 in FIG. 6, it is determined whether or not the obtained third correlation coefficient is smaller than the sixth threshold value (operation 160).

If the obtained third correlation coefficient is smaller than the sixth threshold value, it is determined that there is a shot change possibility with respect to the Nth middle layer frame group based on the normalized correlation (operation 162).

On the contrary, if it is determined that the third differential characteristic value is not larger than the fifth threshold value in the operation 152, or if it is determined that the third correlation coefficient is larger than the seventh threshold value in the operation 160, it is determined that there is no shot change possibility with respect to the Nth middle layer frame group (operation 164).

After the operation 56, it is determined whether or not there is a shot change possibility with respect to the Nth middle layer frame group based on the result of the operation 56 (operation 58).

If there is no shot change possibility with respect to the Nth middle layer frame group, it is determined whether or not the Nth middle layer frame group is the last one of the first through Mth middle layer frame groups (operation 62).

If it is determined that the Nth middle layer frame group is not the last one of the first through Mth middle layer frame groups as a result the operation 62, the (N+1)th (herein, N+1 is a positive integer larger than 1 and smaller than or equal to M) middle layer frame group is designated, and the operation 56 is carried out (operation 64). In the operation 56, a shot change possibility is examined with respect to the (N+1)th middle layer frame group.

If the Nth middle layer frame group is the last one of the first through Mth middle layer frame groups as a result of the operation 62, this means that a process for detecting a shot change in the Lth upper layer frame group is completed. Therefore, it is determined whether or not there is a cut type change detected with respect to the first through Mth middle layer frame groups (operation 66). In other words, it is determined whether or not there is an abrupt shot change in the Lth upper layer frame group.

If it is determined that there is no cut type change in any one of the first through Mth middle layer frame groups, it is examined whether or not there is a gradual type change with respect to the Lth upper layer frame group, and then the operation 46 is carried out (operation 68).

On the contrary, if there is a cut type change, which is an abrupt change of a video shot, with respect to the first through Mth middle layer frame groups in the Lth upper layer frame group, the operation 46 is carried out.

Meanwhile, if there is a shot change possibility with respect to the Nth middle layer frame group as a result of the operation 58, it is determined whether or not there is a cut type change, which is an abrupt video shot change, with respect to the Nth lower layer frame group (operation 60).

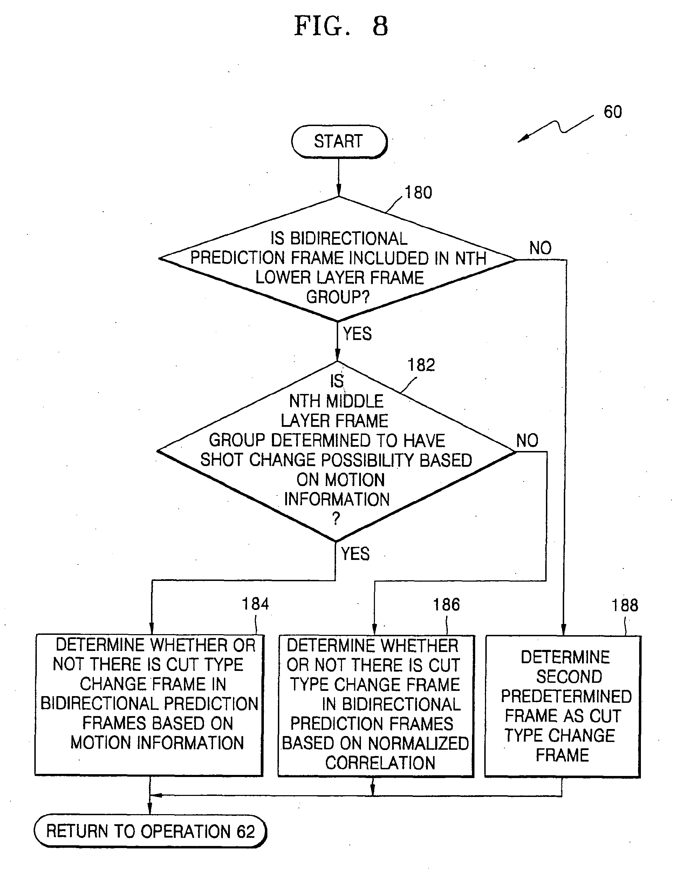

Referring to FIG. 8, the operation 60 comprises operations 180 through 188 of examining whether or not there is a cut type change with respect to the Nth lower layer frame group based on whether or not there is a bidirectional prediction frame in the Nth lower layer frame group.

First, it is determined whether or not there is a bidirectional prediction frame in the Nth lower layer frame group (operation 180). If there is no bidirectional prediction frame in the Nth lower layer frame group, the operation 188 is carried out.

On the contrary, if there is a bidirectional prediction frame in the Nth lower layer frame group, it is determined whether or not the Nth middle layer frame group is the middle layer frame group determined that there is a shot change possibility based on motion information (operation 182).

If the Nth middle layer frame group is the middle layer frame group determined that there is a shot change possibility based on motion information, it is finally determined whether or not there is a cut type change with respect to the bidirectional prediction frames based on motion information (operation 184).

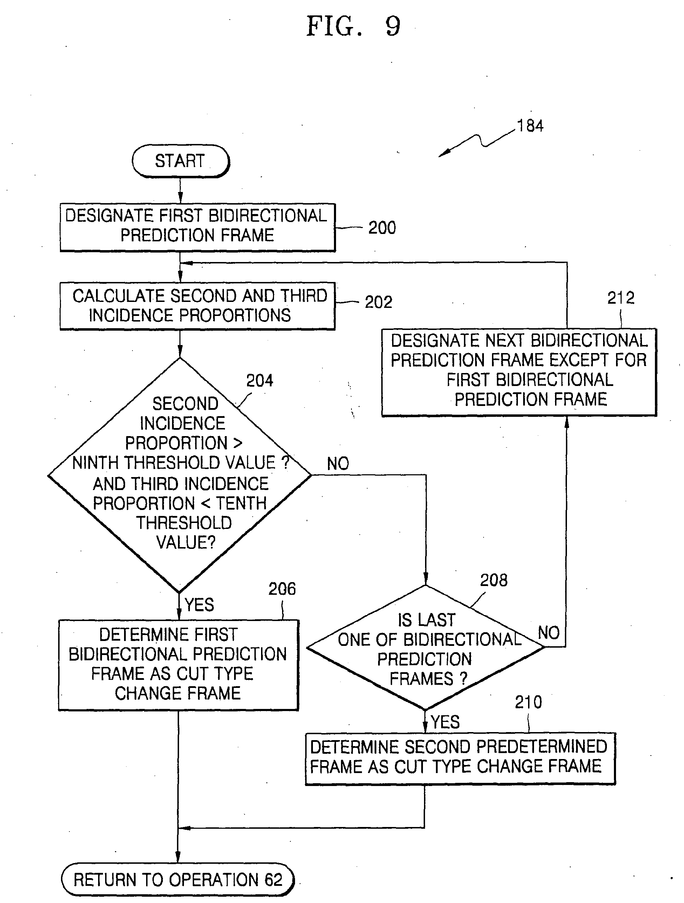

Referring to FIG. 9, the operation 184 comprises operations 200 through 212 of determining whether or not there is a cut type change with respect to the bidirectional prediction frames by using second and third incidence proportions.

First, a first bidirectional prediction frame is designated among the bidirectional prediction frames (operation 200). The first bidirectional prediction frame is a frame positioned in the first order among the bidirectional prediction frames in the Nth lower layer frame group.

After the operation 200, second and third incidence proportions are calculated with respect to the first bidirectional prediction frame (operation 202). The second incidence proportion is a proportion of an incidence of the bidirectional prediction mode to incidences of the forward prediction mode and the reverse prediction mode. The third incidence proportion is a proportion of an incidence of the reverse prediction mode to an incidence of the forward prediction mode. The incidence of the reverse prediction mode represents how may macro blocks with the reverse prediction mode exist in the bidirectional prediction frame. The incidences of the forward prediction mode and the reverse prediction mode represent the sum of the number of macro blocks with the forward prediction mode and the number of macro blocks with the reverse prediction mode in the bidirectional prediction mode. The incidence of the bidirectional prediction mode represents how many macro blocks with the bidirectional prediction mode exist in the bidirectional prediction frame. The second incidence proportion can be obtained from the following equation.

[Equation 4]

$$R2 = (T1 + T2)/U1,$$

where, $R2$ represents the second incidence proportion;
$T1$ represents the incidence of the forward prediction mode;
$T2$ represents the incidence of the reverse prediction mode; and
$U1$ represents the incidence of the bidirectional prediction mode.

On the other hand, the third incidence proportion can be obtained from the following equation.

[Equation 5]

$$R3 = T1/T2$$

where, $R3$ represents the third incidence proportion;
$T1$ represents the incidence of the forward prediction mode; and
$T2$ represents the incidence of the reverse prediction mode.

After the operation 202, the obtained second incidence proportion is compared with a predetermined ninth threshold value, and the obtained third incidence proportion is compared with a predetermined tenth threshold value (operation 204).

If the obtained second incidence proportion is larger than the ninth threshold value, and if the obtained third incidence proportion is smaller than the tenth threshold value, the first bidirectional prediction frame is determined to be a cut type change frame (operation 206).

However, if the obtained second incidence proportion is not larger than the ninth threshold value, or if the obtained third incidence proportion is not smaller than the tenth threshold value, it is determined whether or not the first bidirectional prediction frame is the last one of the bidirectional prediction frames (operation 208). In other words, it is determined whether or not the bidirectional prediction frame designated in the operation 200 is the last one of the bidirectional prediction frames in the Nth lower layer frame group in the order.

If the first bidirectional prediction frame is the last one of the bidirectional prediction frames, the second one of the predetermined frames positioned at both ends of the Nth middle layer frame group is determined to be a cut type change frame (operation 210).

However, if the first bidirectional prediction frame is not the last one of the bidirectional prediction frames, the next bidirectional prediction frame other than the first bidirectional prediction frame is designated, and then the operation 202 is carried out (operation 212). In the operation 202, the second and third incidence proportions are calculated with respect to the next bidirectional prediction frame other than the first bidirectional prediction frame.

Meanwhile, if the Nth middle layer frame group does not correspond to the middle layer frame group determined that there is a shot change possibility based on the motion information in the operation 182, it is finally determined whether or not there is a shot change with respect to the bidirectional prediction frames based on the normalized correlation (operation 186).

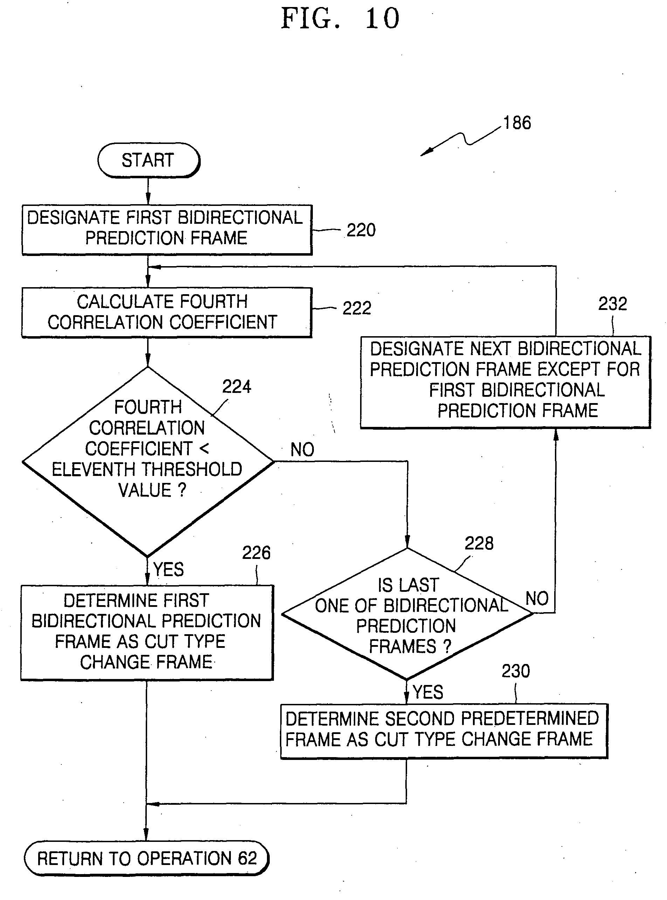

Referring to FIG. 10, the operation 186 comprises operations 220 through 232 of determining whether or not there is a cut type change with respect to bidirectional prediction frames by using a fourth correlation coefficient.

First, a first bidirectional prediction frame is designated among the bidirectional prediction frames (operation 220).

After the operation 220, a fourth correlation coefficient normalized with respect to the first one of the predetermined frames positioned at both ends of the Nth middle layer frame group and the designated bidirectional prediction frame is calculated (operation 222). The fourth correlation coefficient can be obtained from Equation 2.

After the operation 222, the obtained fourth correlation coefficient is compared with a predetermined eleventh threshold value (operation 224).

If the obtained fourth correlation coefficient is smaller than the eleventh threshold value, the first bidirectional prediction frame is determined to be a cut type change frame (operation 226).

On the contrary, if the obtained fourth correlation coefficient is not smaller than the eleventh threshold value, it is determined whether or not the first bidirectional prediction frame is the last one of the bidirectional prediction frames (operation 228).

If the first bidirectional prediction frame is the last one of the bidirectional prediction frames, the second one of the predetermined frames positioned at both ends of the Nth middle layer frame group is determined to be a cut type change frame (operation 230).

On the contrary, if the first bidirectional prediction frame is not the last one of the bidirectional prediction frames, the next bidirectional prediction frame other than the first bidirectional prediction frame is designated, and then the operation 22 is carried out (operation 232).

Meanwhile, as a result of the operation 188, if there is no bidirectional prediction frame in the Nth lower layer frame group, the second one of the predetermined frames positioned at both ends of the Nth middle layer frame group is determined to be a cut type change frame (operation 188).

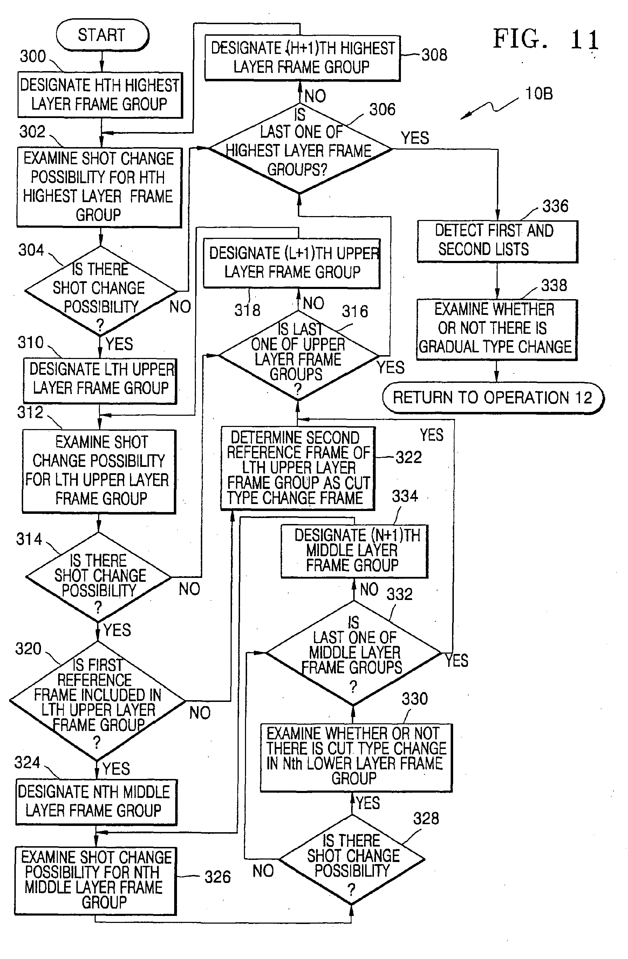

Referring to FIG. 11, the operation 10B comprises operations 300 through 338 of examining whether or not there is a cut type change with respect to the entire video frame sequence and then examining whether or not there is a gradual type change with respect to only restricted video frame segment based on the detected first and second lists.

The operations 300 through 334 shown in FIG. 11 corresponds to the operations 30 through 64 shown in FIG. 3, and thus their detailed descriptions will not be given below.

If the Hth highest layer frame group is the last one of the first through the Gth highest layer frame groups as a result of the operation 306, first and second lists are detected (operation 336). The first list includes upper layer frame groups having a shot change possibility among the first through Kth upper layer frame groups, and the second list contains cut type change frames corresponding to an abrupt change of a video shot. For example, if the upper layer frame groups are the GOPs, the detected GOPs having a shot change possibility are listed into a first list. In addition, a list of the cut type change frames examined in each of the above operations serves as a second list.

After the operation 336, it is examined whether or not there is a gradual type change by using the first and second lists (operation 338). Information on the upper layer frame groups having a shot change possibility can be obtained from the first list. Whether or not there is a gradual type change of a video shot can be determined based on the information on the upper layer frame groups having a shot change possibility on the first list but not containing the cut type change frames in the second list. The detection of the gradual type change is accomplished by using a shot change detection technique based on a conventional plateau detection. The detection of the gradual type change is well known in the art, and thus a detailed description thereof will not be given.

After the operation 10, a shot change list is generated by combining position information of the frames detected as a shot change based on the result of the detection of a shot change in the examined video (operation 12). In other words, the shot change list is generated based on the position information on the shot change frames obtained from the operations 30 through 68 shown in FIG. 3 or the operations 300 through 338 shown in FIG. 11.

The generated shot change list is basic video content structure information, which is essentially used for a video indexing, and as a result, it enables to organize a table of video content, to summarize a video content, or to easily edit a video in video shot units.

Now, an apparatus for detecting video shot changes in a moving picture according to the present will be described with reference with attached drawings.

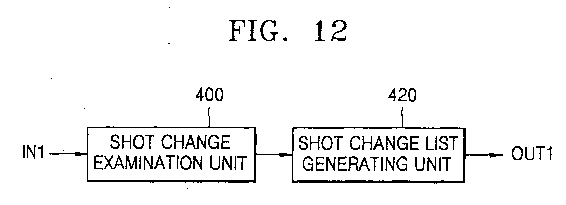

Referring to FIG. 12, the apparatus for detecting video shot changes in a moving picture comprises a shot change examination unit 400 and a shot change list generating unit 420.

The shot change examination unit 400 examines video shot changes with respect to first through Kth (herein, K is a positive integer larger than 1) upper layer frame groups obtained by combining video frames of a moving picture, first through Mth (herein, M is a positive integer larger than 1) middle layer frame groups obtained by combining video frames in the Lth (herein, L is a positive integer larger than 1 and smaller than or equal to K) upper layer frame group of the first through Kth upper layer frame groups, and an Nth (herein, N is a positive integer larger than 1 and smaller than or equal to M) lower layer frame group in the Nth middle layer frame group of the first through Mth middle layer frame groups. The shot change examination unit 400 examines video shot changes with respect to video sequences input through an input terminal IN1, and then outputs the result of examination to the shot change list generating unit 420.

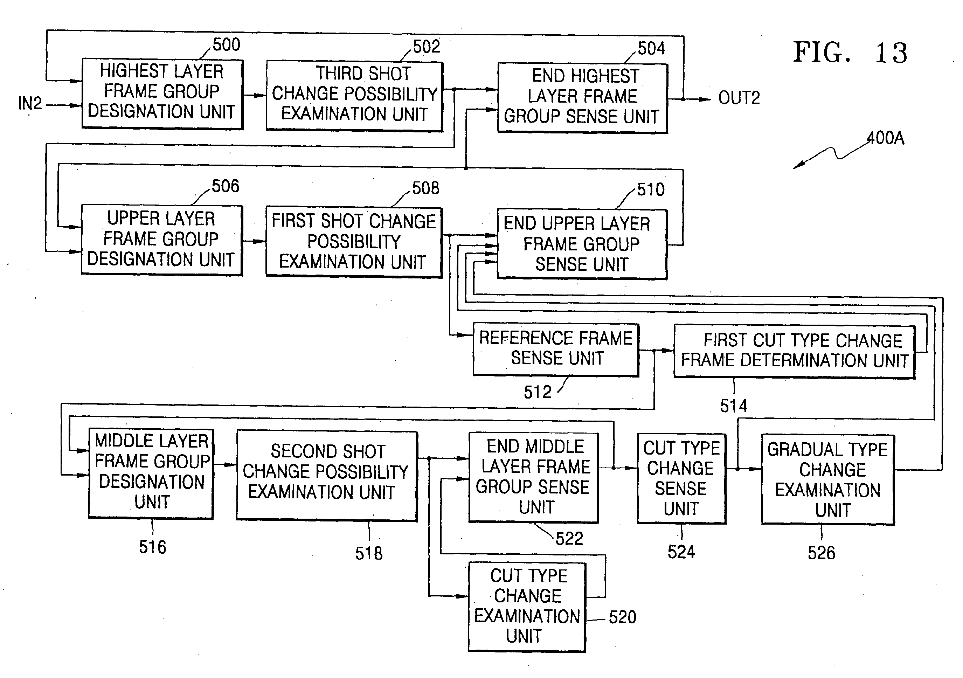

Referring to FIG. 13, the shot change detection unit 400 comprises a highest layer frame group designation unit 500, a third shot change possibility examination unit 502, an end highest layer frame group detection unit 504, an upper layer frame group designation unit 506, a first shot change possibility examination unit 508, an end upper layer group sense unit 510, a reference frame sense unit 512, a first cut type change frame determination unit 514, a middle layer frame group designation unit 516, a second shot change possibility examination unit 518, an end middle layer frame group sense unit 522, a cut type change examination unit 520, a cut type change sense unit 524, and a gradual type change examination unit 526.

The highest layer frame group designation unit 500 designates an Hth (H is a positive integer larger than 1 and smaller than or equal to G) highest layer frame group among the first through Gth (herein, G is a positive integer larger than 1) highest layer frame groups formed by combining the first through Kth upper layer frame groups into a predetermined number of bundles. The highest layer frame group designation unit 500 binds the upper layer frame groups into a predetermined number of bundles with respect to video sequences input through an input terminal IN2 and designates the Hth highest layer frame group among the highest layer frame groups. Then, the result of designation is output to the third shot change possibility examination unit 502.

The third shot change possibility examination unit 502 examines a shot change possibility with respect to the Hth highest layer frame group designated by the highest layer frame group designation unit 500, and outputs the result of examination to the end highest layer frame group detection unit 504 and the upper layer frame group designation unit 506.

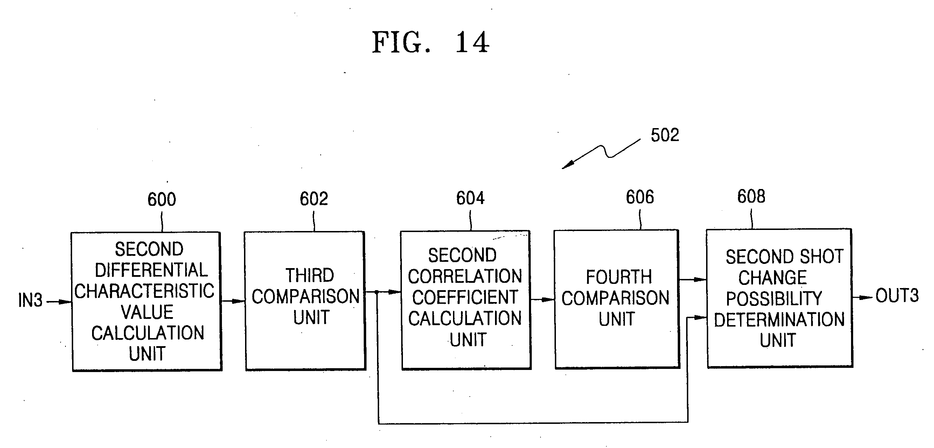

Referring to FIG. 14, the third shot change possibility examination unit 502 comprises a second differential characteristic value calculation unit 600, a third comparison unit 602, a second correlation coefficient calculation unit 604, a fourth comparison unit 606, and a second shot change possibility determination unit 608.

The second differential characteristic value calculation unit 600 calculates a second differential characteristic value of a color histogram with respect to the third reference frames by using Equation 1 when the designated Hth highest layer frame group is input from the input terminal IN3, and then outputs the result of calculation to the third comparison unit 602.

The third comparison unit 602 compares the calculated second differential characteristic value with a predetermined third threshold value, and then outputs the result of comparison to the second correlation coefficient calculation unit 604 and the second shot change possibility determination unit 608.

The second correlation coefficient calculation unit 604 calculates a second correlation coefficient normalized with respect to the third reference frames in response to the result of comparison in the third comparison unit 602, and then outputs the result of calculation to the fourth comparison unit 606.

The fourth comparison unit 606 compares the second correlation coefficient calculated by the second correlation coefficient calculation unit 604 with a predetermined fourth threshold value, and then outputs the result of comparison to the second shot change possibility determination unit 608.

The second shot change possibility determination unit 608 determines whether or not there is a shot change possibility with respect to the Hth highest layer frame group in response to the results of the comparison from the third comparison unit 602 and the fourth comparison unit 606. The second shot change possibility determination unit 608 determines that there is no shot change possibility with respect to the Hth highest layer frame group in response to the result of comparison from the third comparison unit 602, and then outputs the result of determination through the output terminal OUT3. In addition, the second shot change possibility determination unit 608 receives the result of comparison that the second correlation coefficient is smaller than a fourth threshold value as an input from the fourth comparison unit 606, determines that there is a shot change possibility with respect to the Hth highest layer frame group, and then outputs the result of determination to the output terminal OUT3. In addition, the second shot change possibility determination unit 608 receives the result of comparison that the second correlation coefficient is not smaller than the fourth threshold value as an input from the fourth comparison unit 606, determines that there is no shot change possibility with respect to the Hth highest layer frame group, and then outputs the result of determination through the output terminal OUT3.

The end highest layer frame group sense unit 504 shown in FIG. 13 senses whether or not the Hth highest layer frame group is the last one of the first through Gth highest layer frame groups. The end highest layer frame group sense unit 504 senses whether or not the Hth highest layer frame group is the last one of the first through Gth highest layer frame groups in response to the result of examination from the third shot change possibility examination unit 502 or the result of sensing from the end upper layer frame group sense unit 510 which will be described below, and then outputs the result of sensing through the output terminal OUT2 to the highest layer frame group designation unit 500.

The upper layer frame group designation unit 506 designates the Lth upper layer frame group in response to the result of examination from the third shot change possibility examination unit 502, and then outputs the result of designation to the first shot change possibility examination unit 508.

The first shot change possibility examination unit 508 examines a shot change possibility of a video with respect to the Lth upper layer frame group designated by the upper layer frame group designation unit 506, and then outputs the result of examination to the end upper layer frame group sense unit 510 and the reference frame sense unit 512.

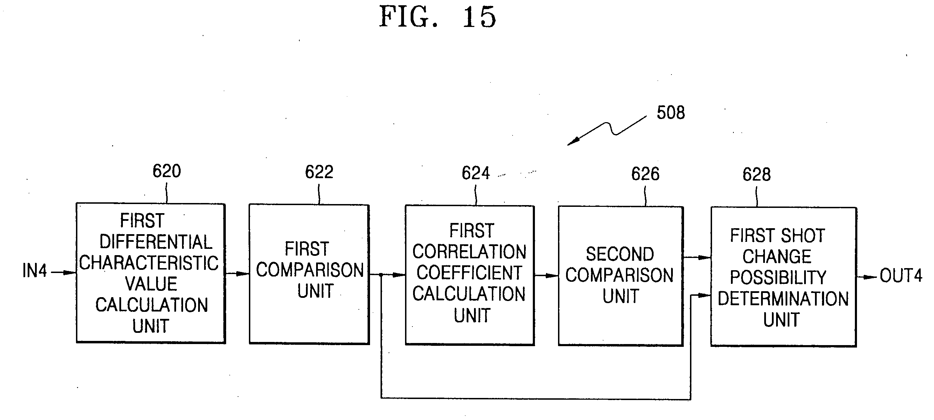

Referring to FIG. 15, the first shot change possibility examination unit 508 comprises a first differential characteristic value calculation unit 620, a first comparison unit 622, a first correlation coefficient calculation unit 624, a second comparison unit 626, and a first shot change possibility determination unit 628.

The first differential characteristic value calculation unit 620 calculates a first differential characteristic value of a color histogram with respect to second reference frames positioned at both ends of the Lth upper layer frame group. If the designated upper layer frame group is received from the input unit IN4, the first differential characteristic value calculation unit 620 calculates a first differential characteristic value of a color histogram with respect to the second reference frames by using Equation 1, and then outputs the result of calculation to the first comparison unit 622.

The first comparison unit 622 compares the calculated first differential characteristic value with a predetermined first threshold value, and then outputs the result of comparison to the first correlation coefficient calculation unit 624 and the first shot change possibility determination unit 628.

The first correlation coefficient calculation unit 624 calculates a first correlation coefficient normalized with respect to the second reference frames by using Equation 2 in response to the result of comparison from the first comparison unit 622, and then outputs the result of comparison to the second comparison unit 626.

The second comparison unit 626 compares the first correlation coefficient calculated in the first correlation coefficient calculation unit 624 with a predetermined second threshold value, and then outputs the result of comparison to the first shot change possibility determination unit 628.

The first shot change possibility determination unit 628 determines whether or not there is a shot change possibility with respect to the Lth upper layer frame group. The first shot change possibility determination unit 628 determines that there is no shot change possibility with respect to the Lth upper layer frame group in response to the result of comparison from the first comparison unit 622, and then outputs the result of determination through the output terminal OUT4. In addition, the first shot change possibility determination unit 628 receives the result of comparison that the first correlation coefficient is smaller than the second threshold value from the second comparison unit 626, determines that there is a shot change possibility with respect to the Lth upper layer frame group, and then outputs the result of determination through the output terminal OUT4. In addition, the first shot change possibility determination unit 628 receives the result of comparison that the first correlation coefficient is not smaller than the second threshold value from the second comparison unit 626, determines that there is no shot change possibility with respect to the Lth upper layer frame group, and then outputs the result of determination through output terminal OUT4.

The end upper layer frame group sense unit 510 shown in FIG. 13 senses whether or not the Lth upper layer frame group is the last one of the first through Kth upper layer frame groups. The end upper layer frame group sense unit 510 senses whether or not the Lth upper layer frame group is the last one of first through Kth **upper** layer frame groups in response to the result of examination from the first shot change possibility examination unit 508, the result of determination from the first cut type frame determination unit 514 which will be described below, the result of sensing from a cut type change sense unit 524, or the result of sensing from a gradual type change sense unit 526, and then outputs the result of sensing to the end highest layer frame group sense unit 504 and the upper layer frame group designation unit 506.

The reference frame sense unit 512 senses whether or not one or more first reference frames which divide the Lth upper layer frame group into first through Mth middle layer frame groups are included in the Lth upper layer frame group in response to the result of examination from the first shot change possibility examination unit 508, and then outputs the result of sensing to the first cut type frame determination unit 514 and the middle layer frame group designation unit 516. In this case, the first reference frames are forward prediction frames.

The first cut type frame determination unit 514 determines the second one of the second reference frames positioned at both ends of the Lth upper layer frame group as a cut type change frame in response to the result of sensing from the reference frame sense unit 512, and then outputs the result of determination to the end upper layer frame group sense unit 510. In this case, the second reference frames are intra frames.

The middle layer frame group designation unit 516 designates the Nth middle layer frame group in response to the result of sensing from the reference frame sense unit 512 or the result of sensing from the end middle layer frame group sense unit 522 which will be described below, and outputs the result of designation to the second shot change possibility examination unit 518.

The second shot change possibility examination unit 518 examines a shot change possibility with respect to the Nth middle layer frame group in response to the result of designation from the middle layer frame group designation unit 516, and then outputs the result of examination to the end middle layer frame group sense unit 522 and the cut type change examination unit 520.

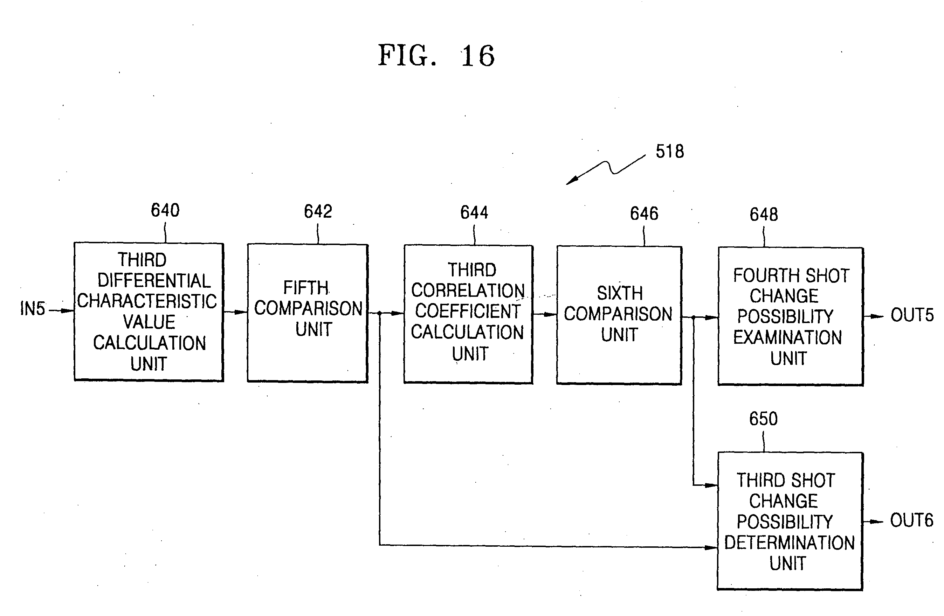

Referring to FIG. 16, the second shot change possibility examination unit 518 comprises a third differential characteristic value calculation unit 640, a fifth comparison unit 642, a third correlation coefficient calculation unit 644, a sixth comparison unit 646, a fourth shot change possibility examination unit 648, and a third shot change possibility determination unit 650.

The third differential characteristic value calculation unit 640 calculates a third differential characteristic value of a color histogram with respect to predetermined frames positioned at both ends of the Nth middle layer frame group by using Equation 1 in response to the Nth middle layer frame group input from the input terminal IN5, and then outputs the result of calculation to the fifth comparison unit 642.

The fifth comparison unit 642 compares the third differential characteristic value obtained from the third differential characteristic value calculation unit 640 with a predetermined fifth threshold value, and then outputs the result of comparison to the third correlation coefficient calculation unit 644 and the third shot change possibility determination unit 650.

The third correlation coefficient calculation unit 644 calculates a third correlation coefficient normalized with respect to the predetermined frames by using Equation 2 in response to the result of comparison obtained from the fifth comparison unit 642, and then outputs the result of comparison to the sixth comparison unit 646.

The sixth comparison unit 646 performs comparison to identify where the third correlation coefficient obtained from the third correlation coefficient calculation unit 644 belongs to based on predetermined sixth and seventh threshold values, and then outputs the result of comparison to the fourth shot change possibility examination unit 648 and the third shot change possibility determination unit 650.

The fourth shot change possibility examination unit 648 examines whether or not there is a shot change possibility based on motion information with respect to the Nth middle layer frame group in response to the result of comparison obtained from the sixth comparison unit 646, and then outputs the result of comparison through the output terminal OUT5.

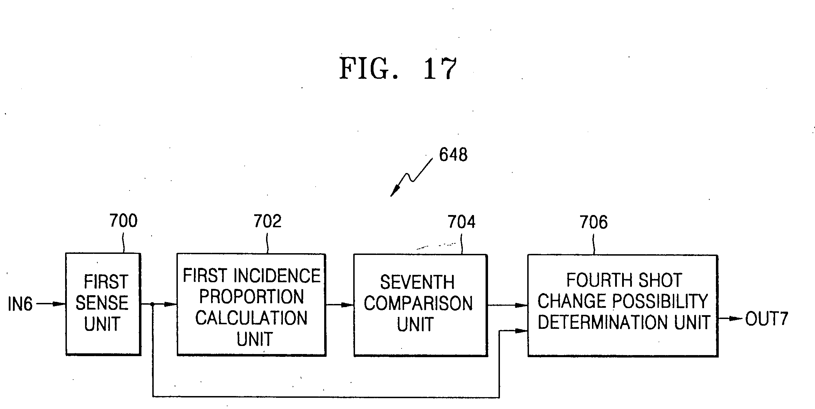

Referring to FIG. 17, the fourth shot change possibility examination unit comprises a first sense unit 700, the first incidence proportion calculation unit 702, a seventh comparison unit 704, and a fourth shot change possibility determination unit 706.

The first sense unit 700 senses whether or not the second one of the predetermined frames positioned at both ends of the Nth middle layer frame group corresponds to one of the first reference frames in response to the result of comparison obtained from the sixth comparison unit 646 through the input unit IN6, and then outputs the result of sensing to the first incidence proportion calculation unit 702 and the fourth shot change possibility determination unit 706.

The first incidence proportion calculation unit 702 calculates a first incidence proportion corresponding to a proportion of an incidence of the forward prediction mode to an incidence of the intra mode with respect to the one of the first reference frames in response to the result of sensing obtained from the first sense unit 700, and then output the result of calculation to the seventh comparison unit 704.

The seventh comparison unit 704 compares the first incidence proportion calculated by the first incidence proportion calculation unit 702 with a predetermined eighth threshold value, and then outputs the result of comparison to the fourth shot change possibility determination unit 706.

The fourth shot change possibility determination unit 706 determines whether or not there is a shot change possibility with respect to the Nth middle layer frame group. The fourth shot change possibility determination unit 706 determines that there is a shot change possibility based on motion information with respect to the Nth middle layer frame group in response to the result of sensing obtained from the first sense unit 700, and then outputs the result of determination through the output terminal OUT7. In addition, the fourth shot change possibility determination unit 706 receives the result of comparison that the first incidence proportion is larger than the eighth threshold value from the seventh comparison unit 704, determines that there is a shot change possibility based on the motion information with respect to the Nth middle layer frame group, and then outputs the result of determination through the output terminal OUT7. Also, the fourth shot change possibility determination unit 706 receives the result of comparison that the first incidence proportion is not larger than the eight threshold value from the seventh comparison unit 704, determines that there is no shot change possibility with respect to the Nth middle layer frame group, and the outputs the result of determination through the output terminal OUT7.

The third shot change possibility determination unit 650 shown in FIG. 16 determines that there is a shot change possibility based on the normalized correlation with respect to the Nth middle layer frame group , or that there is no shot change possibility. The third shot change possibility change determination unit 650 determines that there is no shot change possibility with respect to the Nth middle layer frame group in response to the result of comparison from the fifth comparison unit 642, and then outputs the result of determination through the output terminal OUT6. In addition, the third shot change possibility determination unit 650 receives the result of comparison that the third correlation coefficient is smaller than the sixth threshold value from the sixth comparison unit 646, determines that there is a shot change possibility based on the normalized correlation with respect to the Nth middle layer frame group, and then outputs the result of determination through the output terminal OUT6. Also, the third shot change possibility determination unit 650 receives the result of comparison that the third correlation coefficient is larger than the seventh threshold value from the sixth comparison unit 646, determines that there is no shot change possibility with respect to the Nth middle layer frame group, and then outputs the result of determination through the output terminal OUT6.

The cut type change examination unit 520 shown in FIG. 13 examines whether or not there is a cut type change with respect to the Nth lower layer frame group in response to the result of examination input from the second shot change possibility examination unit 518, and then outputs the result of examination to the end middle layer frame group sense unit 522.

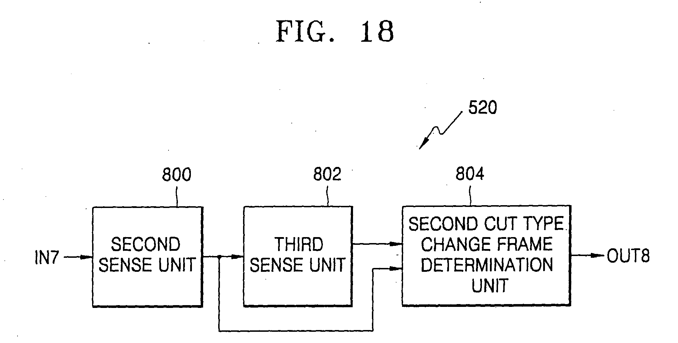

Referring to FIG. 18, the cut type change examination unit 520 comprises a second sense unit 800, a third sense unit 802, and a second cut type change frame determination unit 804.

The second sense unit 800 senses whether or not bidirectional prediction frames are included in the Nth lower layer frame group in response to the result of examination obtained from the second shot change possibility examination unit 518 and input through the input terminal IN7, and then outputs the result of sensing to the third sense unit 802 and the second cut type change frame determination unit 804.

The third sense unit 802 senses whether or not the Nth middle layer frame group corresponds to the middle layer frame group that determines that there is a shot change possibility based on motion information in response to the result of sensing obtained from the second sense unit 800, and then outputs the result of sensing to the second cut type change frame determination unit 804.

The second cut type change frame determination unit 804 finally determines which of the bidirectional prediction frames corresponds to the cut type change frame based on the motion information or the normalized correlation coefficient, or determines that the second one of predetermined frames positioned at both ends of the Nth middle layer frame group corresponds to the cut type change frame. The second cut type change frame determination unit 804 determines that the second one of predetermined frames positioned at both ends of the Nth middle layer frame group corresponds to the cut type change frame in response to the result of sensing from the second sense unit 800, and then outputs the result of determination through the output terminal OUT8. In addition, the second cut type change frame determination unit 804 finally determines which of the bidirectional prediction frames corresponds to the cut type change frame based on the motion information or the normalized coefficients in response to the result of sensing from the third sense unit 802, and then outputs the result of determination through the output terminal OUT8.

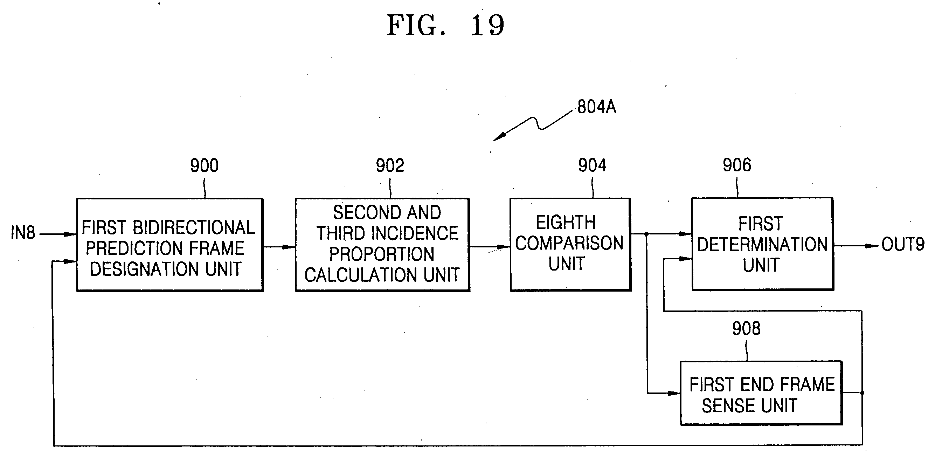

Referring to FIG. 19, the second cut type change frame determination unit 804 comprises a first bidirectional prediction frame designation unit 900, a second and third incidence proportion calculation unit (902), an eighth comparison unit 904, a first determination unit 906, and a first end frame sense unit 908.

The first bidirectional prediction frame designation unit 900 designates first bidirectional prediction frame among the bidirectional prediction frames in the Nth lower layer frame group in response to the result of sensing input through the input terminal IN8 from the third sense unit 802, and then outputs the result of designation to the second and third incidence proportion calculation unit 902.

The second and third incidence proportion calculation unit 902 calculates the second incidence proportion with respect to the first bidirectional prediction frame input from the first bidirectional prediction frame designation unit 900, and then outputs the result of calculation to the eighth comparison unit 904. The second incidence proportion corresponds to a proportion of an incidence of a bidirectional prediction mode to incidences of a forward prediction mode and a reverse prediction mode. Similarly, the second and third incidence proportion calculation unit 902 calculates the third incidence proportion with respect to the first bidirectional prediction frame input from the first bidirectional prediction frame designation unit 900, and then outputs the result of calculation to the eighth comparison unit 904. The third incidence proportion corresponds to a proportion of an incidence of a reverse prediction mode to an incidence of a forward prediction mode

The eighth comparison unit 904 compares the second incidence proportion obtained from the second and third incidence proportion calculation unit 902 with a predetermined ninth threshold value, and compares the third incidence proportion with a predetermined tenth threshold value. Then, the result of comparison is output to the first determination unit 906 and the first end frame sense unit 908.

When the result of comparison that the obtained second incidence proportion is larger than the ninth threshold value and the third incidence proportion is smaller than the ninth threshold value is received from the eighth comparison unit 904, the first determination unit 906 determines that the first bidirectional prediction frame corresponds to the cut type change frame, and then outputs the result of determination through the output terminal OUT9. In addition, when the result of sensing is received from the first end frame sense unit 908 which will be described below, the first determination unit 906 determines that the second one of predetermined frames positioned at both ends of the Nth middle layer frame group corresponds to the cut type change frame, and outputs the result of determination through the output terminal OUT9.

When the obtained second incidence proportion is not larger than the ninth threshold value, or when the obtained third incidence proportion is not smaller than the tenth threshold value, the first end frame sense unit 908 senses whether or not the first bidirectional prediction frame is the last one of the bidirectional prediction frames, and then outputs the result of sensing to the first determination unit 906 and the first bidirectional prediction frame designation unit 900.

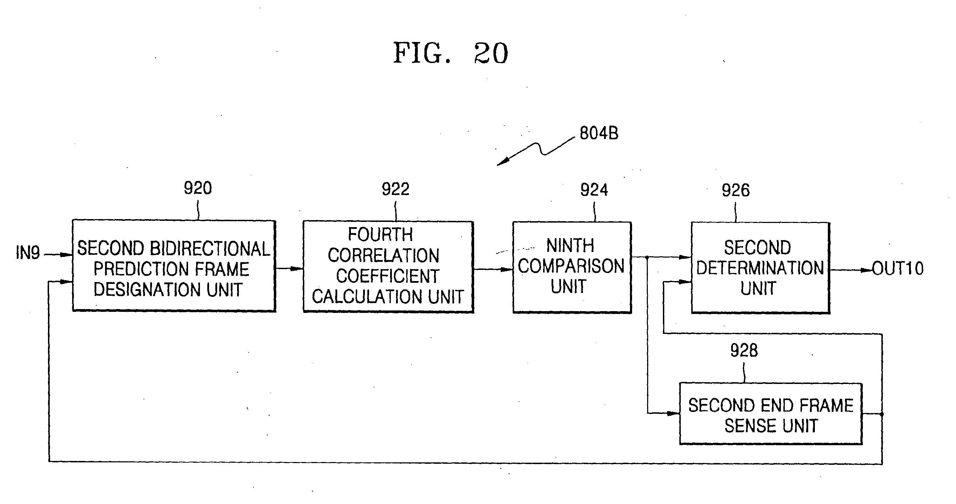

Referring to Fig. 20, the second cut type change frame determination unit 804 comprises a second bidirectional prediction frame designation unit 920, a fourth correlation coefficient calculation unit 922, a ninth comparison unit 924, a second determination unit 926, and a second end frame sense unit 928.

The second bidirectional prediction frame designation unit 920 designates a first bidirectional prediction frame among bidirectional prediction frames in response to the result of sensing input through the input terminal IN9 from the third sense unit 802, and then outputs the result of designation to the fourth correlation coefficient calculation unit 922.

The fourth correlation coefficient calculation unit 922 calculates a fourth correlation coefficient normalized with respect to the first one of the predetermined frames positioned at both ends of the Nth middle layer frame group and the first bidirectional prediction frame designated by the second bidirectional prediction frame designation unit 920, and then outputs the result of calculation to the ninth comparison unit 924.

The ninth comparison unit 924 compares the fourth correlation coefficient obtained from the fourth correlation coefficient calculation unit 922 with a predetermined eleventh threshold value, and then outputs the result of comparison to the second determination unit 926 and the second end frame sense unit 928.

When the result of comparison that the obtained fourth correlation coefficient is smaller than the eleventh threshold value is received from the ninth comparison unit 924, the second determination unit 926 determines that the first bidirectional prediction frame corresponds to the cut type change frame, and then outputs the result of determination through the output terminal OUT10. In addition, when the result of sensing is received from the second end frame sense unit 928 which will be described below, the second determination unit 926 determines that the second one of predetermined frames positioned at both ends of the Nth middle layer frame group corresponds to the cut type change frame, and then output the result of determination through the output terminal OUT10.

When the obtained fourth correlation coefficient is not smaller than the eleventh threshold value, the second end frame sense unit 928 senses whether or not the first bidirectional prediction frame corresponds to the last one of the bidirectional prediction frames, and then outputs the result of sensing to the second determination unit 926 and the second bidirectional prediction frame designation unit 920.

Meanwhile, the end middle layer frame group sense unit 522 shown in FIG. 13 senses whether or not the Nth middle layer frame group is the last one of the first through Mth middle layer frame groups in response to the result of examination from the second shot change possibility examination unit 518 or the cut type change examination unit 510, and then outputs the result of sensing to the cut type change sense unit 524 and the middle layer frame group designation unit 516.

The cut type change sense unit 524 senses whether or not there is a cut type change in the first through Mth middle layer frame groups of the Lth upper layer frame group in response to the result of sensing from the end middle layer frame group sense unit 522, and then outputs the result of sensing to the gradual type change examination unit 526 and the end upper layer frame group sense unit 510.

When it is determined that there is no cut type change in the first through Mth middle layer frame groups of the Lth upper layer frame group in response to the result of sensing from the cut type change sense unit 524, the gradual type change examination unit 526 examines whether or not there is a gradual type change in the Lth upper layer frame group, and then outputs the result of examination to the end upper layer frame group sense unit 510.

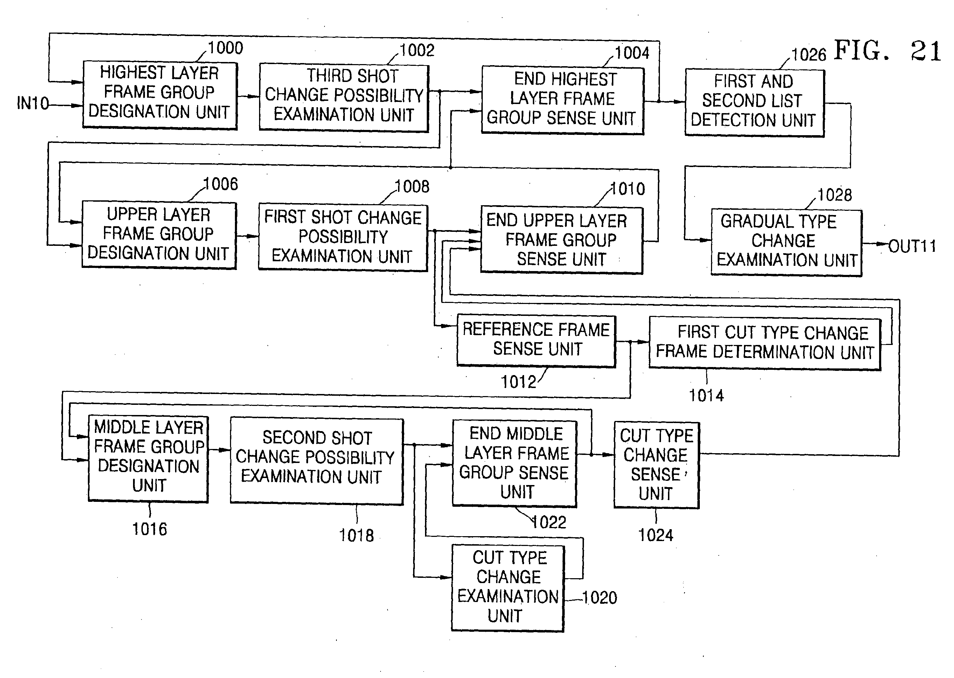

Referring to FIG. 21, the shot change examination unit 400 comprises a highest layer frame group designation unit 1000, a third shot change possibility examination unit 1002, an end highest layer frame group sense unit 1004, an upper layer frame group designation unit 1006, a first shot change possibility examination unit 1008, an end upper layer frame group sense unit 1010, a reference frame sense unit 1012, a first cut type frame determination unit 1014, a middle layer frame group designation unit 1016, a second shot change possibility examination unit 1018, an end middle layer frame group sense unit 1020, a cut type change examination unit 1022, a cut type change sense unit 1024, a first and second list detection unit 1026, and a gradual type change examination unit 1028.

Functions of the components shown in FIG. 21 are similar to those shown in FIG. 12 except for the first and second list detection unit 1026, and thus their detailed description will not be given. Instead, the following description will be focused on the first and second list detection unit 1026.

The first and second list detection unit 1026 composes a first list and a second list in response to the result of sensing from the end highest layer frame group sense unit 1004, and then outputs the result to the gradual type change examination unit 1028. The first list contains upper layer frame groups which have a shot change possibility among the first through Kth upper layer frame groups, and the second list includes cut type change frames corresponding to an abrupt change of a video shot.

The shot change list generating unit 420 in FIG. 12 generates a list of video shot changes in response to the result of detection in the end highest layer frame group sense unit 504 in FIG. 13 or the result of examination from the gradual type change examination unit 1028 in FIG. 21, and then outputs the result of shot change list through the output terminal OUT1.

As described above, according to a method of detecting video shot changes in a moving picture and an apparatus using the same of the present invention, it is possible to detect video shot changes faster because the compressed stream data of the moving picture are grouped in multi-level stream frame units and then only some stream groups examined as having the shot change possibility are applied to a hierarchical shot change detection process.

In addition, since the normalized correlation coefficient as well as the differential characteristic value based on color distribution are used as a detection characteristic value, it is possible to prevent false detection in detecting shot changes caused by light changes and further to effectively detect shot changes with respect to analogous color distributions.

While a method of detecting video shot changes in a moving picture and an apparatus using the same according to the present invention have been particularly shown and described with reference to exemplary embodiments thereof, it will be understood by those skilled in the art that various changes in form and details may be made therein without departing from the spirit and scope of the invention as defined by the appended claims. The exemplary embodiments should be considered in descriptive sense only and not for purposes of limitation. Therefore, the scope of the present invention is defined not by the detailed description of the invention but by the appended claims, and all differences within the scope of the present invention will be construed as being included in the present invention.

**Claims**

1. A method of detecting video shot changes in a moving picture, the method comprises:

   (a) examining whether or not there is a video shot change with respect to first through Kth (herein, K is a positive integer larger than 1) upper layer frame groups formed by combining video frames of a moving picture, first through Mth (herein, M is a positive integer larger than 1) middle layer frame groups formed by combining video frames in an Lth (herein, L is a positive integer larger than 1 and smaller than or equal to K) upper layer frame group of the first through Kth upper layer frame groups, and an Nth (herein, N is a positive integer larger than 1 and smaller than or equal to M) lower layer frame group in the Nth middle layer frame group of the first through Mth middle layer frame groups; and
   (b) generating a video shot change list by using result of the operation (a).

2. The method according to claim 1, wherein the operation (a) comprises operations of:

   (a1) designating the Lth upper layer frame group in order to examine the video shot change;
   (a2) examining whether or not there is a shot change possibility with respect to the Lth upper layer frame group;
   (a3) determining whether or not there is a shot change possibility with respect to the Lth upper layer frame group;
   (a4) determining whether or not there is one or more first reference frames which divide the Lth upper layer frame group into the first through Mth middle layer frame groups in the Lth upper layer frame group if it is determined that there is a shot change possibility in the Lth upper layer frame group;
   (a5) designating the Nth middle layer frame group in order to examine the video shot change if the first reference frame is in the Lth upper layer frame group;
   (a6) examining a shot change possibility with respect to the Nth middle layer frame group;
   (a7) determining whether or not there is a shot change possibility with respect to the Nth middle layer frame group; and
   (a8) examining whether or not there is a cut type change with respect to the Nth lower layer frame group if there is a shot change possibility with respect to Nth middle layer frame group.

3. The method according to claim 2, wherein the operation (a) is **characterized in that** the first reference frames are forward prediction frames.

4. The method according to claim 3, wherein the operation (a) further comprises operations of:

   (a9) designating an Hth highest layer frame group among first through Gth (H is a positive integer larger than 1 and smaller than or equal to G, and G is a positive integer larger than 1) highest layer frame groups formed by combining the first through Kth upper layer frame groups;

(a10) examining whether or not there is a shot change possibility with respect to the Hth highest layer frame group;

(a11) determining whether or not there is a shot change possibility with respect to the Hth highest layer frame group; and

returning to operation (a1) if there is the shot change possibility with respect to the Hth highest layer frame group.

5.  The method according to claim 4, wherein the operation (a) further comprises operations of:

(a12) determining whether or not the Hth highest layer frame group is last one of the first through Gth highest layer frame groups of the moving picture if it is determined that there is no shot change possibility with respect to the Hth highest layer frame group as a result the operation (a11);

(a13) designating an (H+1)th (herein, H+1 is a positive integer larger than 1 and smaller than or equal to G) highest layer frame group if it is determined that the Hth highest layer frame group is not the last one of the first through Gth highest layer frame groups, and then returning to the operation (a10); and

returning to operation (b) if it is determined that the Hth highest layer frame group is the last one of the first through Gth highest layer frame groups.

6.  The method according to claim 5, wherein the operation (a) further comprises operations of:

(a14) determining whether or not the Lth upper layer frame group is last one of the first through Kth upper layer frame groups if it is determined that there is no shot change possibility with respect to the Lth upper layer frame group in the operation (a3);

(a15) designating an (L+1)th (herein, L+1 is a positive integer larger than 1 and smaller than or equal to K) upper layer frame group if it is determined that the Lth upper layer frame group is not the last one of the first through Kth upper layer frame groups, and then returning to the operation (a2), and

returning to operation (a12) if the Lth upper layer frame group corresponds to the last one of first through Kth upper layer frame groups.

7.  The method according to claim 6, wherein the operation (a) further comprises an operation of:

(a16) determining that second one of the second reference frames positioned at both ends of the Lth upper layer frame group corresponds to a cut type change frame, which is an abrupt change of a video shot, and then performing the operation (a14) if it is determined that there is no first reference frame which divides the Lth upper layer frame group into the first through Mth middle layer frame groups in the Lth upper layer frame group as a result of the operation (a4).

8.  The method according to claim 7, wherein the operation (a) further comprises operations of:

(a17) determining whether or not the Nth middle layer frame group is last one of the first through Mth middle layer frame groups if it is determined that there is no shot change possibility with respect to the Nth middle layer frame group as a result of the operation (a7); and

(a18) designating an (N+1)th (herein, (N+1) is a positive integer larger than 1 and smaller than or equal to M) middle layer frame group if it is determined that the Nth middle layer frame group is not the last one of the first through Mth middle layer frame groups, and then returning to the operation (a6).

9.  The method according to claim 8, wherein the operation (a) further comprises:

(a19) determining whether or not there is the cut type change frame with respect to the first through Mth middle layer frame groups of the Lth upper layer frame group if it is determined that the Nth middle layer frame group is the last one of the first through Mth middle layer frame groups as a result of the operation (a17);

(a20) examining whether or not there is a gradual type change with respect to the Lth upper layer frame group if it is determined that there is no cut type change in the first through Mth middle layer frame groups, and returning to the operation (a14), and

returning to operation (a14) if the cut type change is in the first through Mth middle layer frame groups of the Lth upper layer frame group.

10. The method according to any of claims 3 to 9, wherein the operation (a2) comprises operations:

(a100) calculating a first differential characteristic value of a color histogram with respect to second reference frames positioned at both ends of the Lth upper layer frame group;
(a102) comparing the first differential characteristic value with a predetermined first threshold value;
(a104) calculating a normalized first correlation coefficient with respect to the second reference frames if the calculated first differential characteristic value is larger than the first threshold value;
(a106) comparing the first correlation coefficient with a predetermined second threshold value;
(a108) determining that there is a shot change possibility with respect to the Lth upper layer frame group if the first correlation coefficient is smaller than the second threshold value; and
(a110) determining that there is no shot change possibility with respect to the Lth upper layer frame group if the first differential characteristic value is not larger than the first threshold value as a result of the operation (a102) or if the first correlation coefficient is not smaller than the second threshold value as a result of the operation (a106).

11. The method according to claim 10, wherein the operation (a2) is **characterized in that** the second reference frames are intra frames.

12. The method according to any of claims 4 to 9, and claims 10 and 11 when dependent on any of claims 4 to 9, wherein the operation (a10) comprises operations of:

(a200) calculating a second differential characteristic value of a color histogram with respect to third reference frames positioned at both ends of the Hth highest layer frame group;
(a202) comparing the second differential characteristic value with a predetermined third threshold value;
(a204) calculating a normalized second correlation coefficient with respect to the third reference frames if the calculated second differential characteristic value is larger than the third threshold value;
(a206) comparing the second correlation coefficient with a predetermined fourth threshold value;
(a208) determining that there is a shot change possibility with respect to the Hth highest layer frame group if the second correlation coefficient is smaller than the fourth threshold value; and
(a210) determining that there is no shot change possibility with respect to the Hth highest layer frame group if the second differential characteristic value calculated in the operation (a202) is not larger than the second threshold value or if the second correlation coefficient calculated in the operation (a206) is not smaller than the fourth threshold value.

13. The method according to any of claims 3 to 12, wherein the operation (a6) comprises operations of:

(a300) calculating a third differential characteristic value of a color histogram with respect to predetermined frames positioned at both ends of the Nth middle layer frame group;
(a302) comparing the third differential characteristic value with a predetermined fifth threshold value;
(a304) calculating a third correlation coefficient normalized with respect to the predetermined frames if the third differential characteristic value is larger than the fifth threshold value;
(a306) determining whether or not the third correlation coefficient is between a predetermined sixth threshold value and a predetermined seventh threshold value;
(a308) examining whether or not there is a shot change possibility based on motion information with respect to the Nth middle layer frame group if the third correlation coefficient is between the sixth threshold value and the seventh threshold value;
(a310) determining whether or not the third correlation coefficient is smaller than the sixth threshold value if the third correlation coefficient is not between the sixth threshold value and the seventh threshold value;
(a312) determining that there is a shot change possibility with respect to the Nth middle layer frame group possibility based on normalized correlation if the third correlation coefficient is smaller than the sixth threshold value; and
(a314) determining that there is no shot change possibility with respect to the Nth middle layer frame group if the third differential characteristic value calculated in the operation (a302) is not larger than the fifth threshold value or if the third correlation coefficient calculated in the operation (a310) is larger than the seventh threshold value.

**14.** The method according to claim 13, wherein the operation (a308) comprises operations of:

(a400) determining whether or not the second one of the predetermined frames positioned at both ends of the Nth middle layer frame group corresponds to one of the first reference frames;

(a402) calculating a first incidence proportion corresponding to a proportion of an incidence of a forward prediction mode to an incidence of an intra mode with respect to the one of the first reference frames if the second one of the predetermined frames corresponds to the one of the first reference frames;

(a404) comparing the first incidence proportion with a predetermined eighth threshold value;

(a406) determining that there is no shot change possibility with respect to the Nth middle layer frame group if the first incidence proportion is not larger than the eighth threshold value; and

(a408) determining that there is a shot change possibility based on the motion information with respect to the Nth middle layer frame group if the second one of the predetermined frames does not correspond to any one of the first reference frames or if the first incidence proportion is larger than the eighth threshold value.

**15.** The method according to claim 14, wherein the operation (a8) comprises operations of:

(a500) determining whether or not the Nth lower layer frame group includes a bidirectional prediction frame;

(a502) determining whether or not the Nth middle layer frame group corresponds to the middle layer frame which is determined that there is a shot change possibility based on the motion information;

(a504) determining whether or not there is a shot change possibility based on the motion information with respect to the bidirectional prediction frames if the Nth middle layer frame group corresponds to the middle layer frame group which is determined that there is a shot change possibility based on the motion information;

(a506) determining whether or not there is a shot change possibility based on the motion information with respect to the bidirectional prediction frames if the Nth middle layer frame group does not correspond to the middle layer frame group which is determined that there is a shot change possibility based on the motion information; and

(a508) determining that the second one of the predetermined frames positioned at both ends of the Nth middle layer frame group corresponds to the cut type change frame if the Nth lower layer frame group does not include any one of the bidirectional prediction frames.

**16.** The method according to claim 15, wherein the operation (a504) comprises operations of:

(a600) designating a first bidirectional prediction frame among the bidirectional prediction frames;

(a602) calculating a second incidence proportion corresponding to a proportion of an incidence of a bidirectional prediction mode to incidences of a forward prediction mode and a reverse prediction mode and a third incidence proportion corresponding to a proportion of an incidence of a reverse prediction mode to an incidence of a forward prediction mode with respect to the first bidirectional prediction frame;

(a604) comparing the second incidence proportion with a predetermined ninth threshold value and comparing the third incidence proportion with a predetermined ninth threshold value;

(a606) determining that the first bidirectional prediction frame corresponds to the cut type change frame if the second incidence proportion is larger than the ninth threshold value and if the third incidence proportion is smaller than the tenth threshold value;

(a608) determining whether or not the first bidirectional prediction frame is last one of the bidirectional prediction frames if the second incidence proportion is not larger than the ninth threshold value or if the third incidence proportion is not smaller than the tenth threshold value;

(a610) determining whether or not second one of the predetermined frames positioned at both ends of the Nth middle layer frame group corresponds to the cut type change frame if the first bidirectional prediction frame is the last one of the bidirectional prediction frames; and

(a612) designating next one of the bidirectional prediction frames except for the first bidirectional prediction frame if the first bidirectional frame is not the last one of the bidirectional prediction frames, and then returning to the operation (a602).

**17.** The method according to claim 15 or 16, wherein the operation (a506) comprises operations of:

(a700) designating a first bidirectional prediction frame among the bidirectional prediction frames;

(a702) calculating a fourth correlation coefficient normalized with respect to the first bidirectional prediction frame and first one of the predetermined frames positioned at both ends of the Nth middle layer frame group;

(a704) comparing the fourth correlation coefficient with a predetermined eleventh threshold value;

(a706) determining that the first bidirectional prediction frame corresponds to the cut type change frame if the fourth correlation coefficient is smaller than the eleventh threshold value;

(a708) determining whether or not the first bidirectional prediction frame is last one of the bidirectional prediction frames if the fourth correlation coefficient is not smaller than the eleventh threshold value;

(a710) determining that the second one of the predetermined frames positioned at both ends of the Nth middle layer frame group corresponds to the cut type change frame if the first bidirectional prediction frame is the last one of the bidirectional prediction frames; and

(a712) designating next one of the bidirectional prediction frames except for the first bidirectional prediction frame if the first bidirectional prediction frame is not the last one of the bidirectional prediction frames, and then returning to the operation (a702).

18. The method according to claim 8, wherein the operation (a) further comprises operations:

(a21) detecting a first list which includes upper layer frame groups having a shot change possibility among the first through Kth upper layer frame groups and a second list which includes cut type change frames corresponding to abrupt changes of a vide shot if it is determined that the Hth highest layer frame group is the last one of the first through Gth highest layer frame groups as a result of the operation (a12);

(a22) examining whether or not there is a gradual type change frame corresponding to a smooth change of a video shot by using the first list and the second list, and

generating a video shot change list by using the first and the second lists detected in the operation (b) and the result of examination in the operation (c).

19. The method according to any preceding claim, wherein the operation (a) is **characterized in that** the first through Kth upper layer frame groups are group-of-pictures including intra frames, unidirectional prediction frames, and bidirectional prediction frames.

20. An apparatus for detecting video shot changes of a moving picture, the apparatus comprising:

a shot change examination unit which is arranged to examine video shot changes with respect to first through Kth (herein, K is a positive integer larger than 1) upper layer frame groups formed by combining video frames of the moving picture, first through Mth (herein, M is a positive integer larger than 1) middle layer frame groups formed by combining the video frames in an Lth (herein, L is a positive integer larger than 1 and smaller than or equal to K) upper layer frame group among the first through Kth upper layer frame groups, and an Nth (herein, N is a positive integer larger than 1 and smaller than or equal to M) lower layer frame group of the Nth middle layer frame group among the first through Mth middle layer frame groups; and

a shot change list generating unit which is arranged to generate a shot change list of the examined video.

21. The apparatus according to claim 20, wherein the shot change examination unit comprises:

an upper layer frame group designation unit which is arranged to designate the Lth upper layer frame group;

a first shot change possibility examination unit which is arranged to examine a shot change possibility with respect to the Lth upper layer frame group;

a reference frame sense unit which is arranged to sense whether or not the Lth upper layer frame group includes one or more first reference frames which divide the Lth upper layer frame group into the first through Mth middle layer frame groups;

a middle layer frame group designation unit which is arranged to designate the Nth middle layer frame group;

a second shot change possibility examination unit which is arranged to examine a shot change possibility with respect to the Nth middle layer frame group; and

a cut type change examination unit which is arranged to examine whether or not there is the cut type change with respect to the Nth lower layer frame group.

22. The apparatus according to claim 21, wherein the shot change examination unit is **characterized in that** the first reference frames are forward prediction frames.

23. The apparatus according to claim 22, wherein the shot change examination unit further comprises:

a highest layer frame group designation unit which is arranged to designate an Hth highest layer frame group among first through Gth highest layer frame groups (H is a positive integer larger than 1 and smaller than or equal to G, and G is a positive integer larger than 1) formed by combining the first through Kth upper layer frame groups into a predetermined number of groups;

a third shot change possibility examination unit which is arranged to examine a shot change possibility with respect to the Hth highest layer frame group; and

an end highest layer frame group sense unit which is arranged to sense whether or not the Hth highest layer frame group is last one of the first through Gth highest layer frame groups of the moving picture.

24. The apparatus according to claim 23, wherein the shot change examination unit further comprises:

an end upper layer frame group sense unit which is arranged to sense whether or not the Lth upper layer frame group is last one of the first through Kth upper layer frame groups of the moving picture.

25. The apparatus according to claim 24, wherein the shot change examination unit further comprises:

a first cut type change frame determination unit which is arranged to determine second one of the second reference frames positioned at both ends of the Lth upper layer frame group as the cut type change frame corresponding to an abrupt change of a video shot in response to the result of sensing from the reference frame sense unit.

26. The apparatus according to claim 25, wherein the shot change examination unit further comprises:

an end middle layer frame group sense unit which is arranged to sense whether or not the Nth middle layer frame group is last one of the first through Mth middle layer frame groups of the moving picture.

27. The apparatus according to claim 26, wherein the shot change examination unit further comprises:

a cut type change sense unit which is arranged to sense whether or not there is the cut type change with respect to the first through Mth middle layer frame groups in the Lth upper layer frame group; and

a gradual type change examination unit which is arranged to examine whether or not there is the gradual type change in the Lth upper layer frame group if it is determined that there is no cut type change with respect to the first through Mth middle layer frame groups.

28. The apparatus according to any of claims 22 to 27, wherein the first shot change possibility examination unit comprises:

a first differential characteristic value calculation unit which is arranged to calculate a first differential characteristic value of a color histogram with respect to second reference frames positioned at both ends of the Lth upper layer frame group;

a first comparison unit which is arranged to compare the first differential characteristic value with a predetermined first threshold value;

a first correlation coefficient unit which is arranged to calculate a first correlation coefficient normalized with respect to the second reference frames;

a second comparison unit which is arranged to compare the first correlation coefficient with a predetermined second threshold value; and

a first shot change possibility determination unit which is arranged to determine the shot change possibility with respect to the Lth upper layer frame group.

29. The apparatus according to claim 28, wherein the first shot change possibility examination unit is **characterized in that** the second reference frames are intra frames.

30. The apparatus according to any of claims 23 to 29, wherein the third shot change possibility examination unit comprises:

a second differential characteristic value calculation unit which is arranged to calculate a second differential characteristic value of a color histogram with respect to third reference frames positioned at both ends of the Hth highest layer frame group;

a third comparison unit which is arranged to compare the second differential characteristic value with a predetermined third threshold value;
a second correlation coefficient calculation unit which is arranged to calculate a second correlation coefficient normalized with respect to the third reference frames;
a fourth comparison unit which is arranged to compare the second correlation coefficient with a predetermined fourth threshold value; and
a second shot change possibility determination unit which is arranged to determine whether or not there is a shot change possibility with respect to the Hth highest layer frame group.

31. The apparatus according to any of claims 22 to 30, wherein the second shot change possibility examination unit comprises:

a third differential characteristic value calculation unit which is arranged to calculate a third differential characteristic value of a color histogram with respect to predetermined frames positioned at both ends of the Nth middle layer frame group;
a fifth comparison unit which is arranged to compare the third differential characteristic value with a predetermined fifth threshold value;
a third correlation coefficient calculation unit which is arranged to calculate a third correlation coefficient normalized with respect to the predetermined frames;
a sixth comparison unit which is arranged to perform comparison for determining where the third correlation coefficient belongs to based on predetermined sixth and seventh threshold values;
a fourth shot change possibility examination unit which is arranged to examine whether or not there is a shot change possibility based on motion information with respect to the Nth middle layer frame group; and
a third shot change possibility determination unit which is arranged to determine that there is a shot change possibility or there is no shot change possibility with respect to the Nth middle layer frame group based on normalized correlation.

32. The apparatus according to claim 31, wherein the fourth shot change possibility examination unit comprises:

a first sense unit which is arranged to sense whether or not second one of predetermined frames positioned at both ends of the Nth middle layer frame group corresponds to one of the first reference frames;
a first incidence proportion calculation unit which is arranged to calculate a first incidence proportion corresponding to a proportion of an incidence of a forward prediction mode to an incidence of an intra mode with respect to the one of the first reference frame;
a seventh comparison unit which is arranged to compare the fist incidence proportion with a predetermined eighth threshold value; and
a fourth shot change possibility determination unit which is arranged to determine whether or not there is a shot change possibility with respect to the Nth middle layer frame group.

33. The apparatus according to claim 32, wherein the cut type change examination unit comprises:

a second sense unit which is arranged to sense whether or not there is a bidirectional prediction frame in the Nth lower layer frame group;
a third sense unit which is arranged to sense whether or not the Nth middle layer frame group corresponds to a middle layer frame group which is determined that there is the shot change possibility based on the motion information; and
a second cut type change frame determination unit which is arranged to determine that the bidirectional prediction frames corresponds to the cut type change frames based on the motion information or the normalized correlation coefficient or determines that the second one of the predetermined frames positioned at both ends of the Nth middle layer frame group corresponds to the cut type change frame.

34. The apparatus according to claim 33, wherein the second cut type change frame determination unit comprises:

a first bidirectional prediction frame designation unit which is arranged to designate a first bidirectional prediction frame among the bidirectional prediction frames;
a second and third incidence proportion calculation unit which is arranged to calculate a second incidence proportion corresponding to a proportion of an incidence of a bidirectional prediction mode to incidences of a forward prediction mode and a reverse prediction mode and a third incidence proportion corresponding to a proportion of an incidence of a reverse prediction mode to an incidence of a forward prediction mode;

an eighth comparison unit which is arranged to compare the second incidence proportion with a predetermined ninth threshold value and compares the third incidence proportion with a predetermined tenth threshold value; a first determination unit which is arranged to determine that the first bidirectional prediction frame corresponds to the cut type change frame if the second incidence proportion is larger than the ninth threshold value and if the third incidence proportion is smaller than the tenth threshold value, or determines that the second one of the predetermined frames positioned at both ends of the Nth middle layer frame group corresponds to the cut type change frame if the first bidirectional prediction frame is the last one of the bidirectional prediction frames; and

a first end frame sense unit which is arranged to sense whether or not the first bidirectional prediction frame corresponds to the last one of the bidirectional prediction frames if the second incidence proportion is not larger than the ninth threshold value or if the third incidence proportion is not smaller than the tenth threshold value.

35. The apparatus according to claim 33, wherein the second cut type change frame determination unit comprises:

a second bidirectional prediction frame designation unit which is arranged to designate a first bidirectional prediction frame among the bidirectional prediction frames;

a fourth correlation coefficient calculation unit which is arranged to calculate a fourth correlation coefficient normalized with respect to first one of the predetermined frames positioned at both ends of the Nth middle layer frame group and the first bidirectional prediction frame;

a ninth comparison unit which is arranged to compare the fourth correlation coefficient with a predetermined eleventh threshold value;

a second determination unit which is arranged to determine that the first bidirectional prediction frame corresponds to the cut type change frame if the fourth correlation coefficient is smaller than the eleventh threshold value or determines that the second one of the predetermined frames positioned at both ends of the Nth middle layer frame group corresponds to the cut type change frame if the first bidirectional prediction frame is the last one of the bidirectional prediction frames; and

a second end frame sense unit which is arranged to sense whether or not the first bidirectional prediction frame is last one of the bidirectional prediction frames if the fourth correlation coefficient is not smaller than the eleventh threshold value.

36. The apparatus according to claim 26, further comprising:

a first and second list detection unit which is arranged to detect a first list which includes upper layer frame groups having a shot change possibility among the first through Kth upper layer frame groups and a second list which includes cut type change frames experiencing an abrupt change of a video shot; and

a gradual type change examination unit which is arranged to examine whether or not there is a gradual type change corresponding to a smooth change of a video shot in the moving picture, and

a video shot change list is arranged to be generated by using the first and the second lists detected by the first and second list detection unit and the result of examination in the gradual type change examination unit.

# FIG. 1

```
        ┌─────────────┐
        │    START    │
        └─────────────┘
               │
               ▼
┌──────────────────────────────────┐
│  EXAMINE VIDEO SHOT CHANGES WITH  │
│  RESPECT TO FIRST THROUGH KTH     │
│  UPPER LAYER FRAME GROUPS, FIRST  │── 10
│  THROUGH MTH MIDDLE LAYER FRAME   │
│  GROUPS, AND NTH LOWER LAYER      │
│  FRAME GROUP                      │
└──────────────────────────────────┘
               │
               ▼
┌──────────────────────────────────┐
│    GENERATE A SHOT CHANGE LIST    │── 12
└──────────────────────────────────┘
               │
               ▼
        ┌─────────────┐
        │     END     │
        └─────────────┘
```

# FIG. 2

SECOND MIDDLE
LAYER FRAME
GROUP

FOURTH MIDDLE
LAYER FRAME
GROUP

FIRST HIGHEST LAYER FRAME GROUP

FIRST MIDDLE
LAYER FRAME
GROUP

THIRD MIDDLE
LAYER FRAME
GROUP

FIFTH MIDDLE
LAYER FRAME
GROUP

$\cdots B I_1 B B P_1 B_1 B_2 P_2 B B P_3 B B P_4 B B I_2 B B P B B P B B P B B P B B I_3 B \cdots$

FIRST UPPER LAYER FRAME GROUP

SECOND UPPER LAYER FRAME GROUP

FIG. 3

START — 30

DESIGNATE HTH HIGHEST LAYER FRAME GROUP

EXAMINE SHOT CHANGE POSSIBILITY FOR HTH HIGHEST LAYER FRAME GROUP — 32

IS THERE SHOT CHANGE POSSIBILITY ? — 34

DESIGNATE (H+1)TH HIGHEST LAYER FRAME GROUP — 38

IS LAST ONE OF HIGHEST LAYER FRAME GROUPS? — 36

NO

YES

RETURN TO OPERATION 12

10A

NO

YES — 40

DESIGNATE LTH UPPER LAYER FRAME GROUP

DESIGNATE (L+1)TH UPPER LAYER FRAME GROUP — 48

IS LAST ONE OF UPPER LAYER FRAME GROUPS ? — 46

NO

YES

EXAMINE SHOT CHANGE POSSIBILITY FOR LTH UPPER LAYER FRAME GROUP — 42

IS THERE SHOT CHANGE POSSIBILITY ? — 44

NO

YES

IS FIRST REFERENCE FRAME INCLUDED IN LTH UPPER LAYER FRAME GROUP ? — 50

NO

YES — 54

DETERMINE SECOND REFERENCE FRAME OF LTH UPPER LAYER FRAME GROUP AS CUT TYPE CHANGE FRAME — 52

DESIGNATE (N+1)TH MIDDLE LAYER FRAME GROUP — 64

EXAMINE WHETHER OR NOT THERE IS GRADUAL TYPE CHANGE — 68

NO

IS THERE CUT TYPE CHANGE IN FIRST THROUGH MTH MIDDLE LAYER FRAME GROUPS ? — 66

YES

IS LAST ONE OF MIDDLE LAYER FRAME GROUPS ? — 62

NO

YES

EXAMINE WHETHER OR NOT THERE IS CUT TYPE CHANGE IN NTH LOWER LAYER FRAME GROUP — 60

YES

IS THERE SHOT CHANGE POSSIBILITY ? — 58

NO

DESIGNATE NTH MIDDLE LAYER FRAME GROUP

EXAMINE SHOT CHANGE POSSIBILITY FOR NTH MIDDLE LAYER FRAME GROUP — 56

# FIG. 4

32

START

CALCULATE SECOND DIFFERENTIAL CHARACTERISTIC VALUE FOR THIRD REFERENCE FRAMES — 100

SECOND DIFFERENTIAL CHARACTERISTIC VALUE > THIRD THRESHOLD VALUE ? 102 — NO

YES

CALCULATE SECOND CORRELATION COEFFICIENT FOR THIRD REFERENCE FRAMES — 104

SECOND CORRELATION COEFFICIENT < FOURTH THRESHOLD VALUE ? 106 — NO

YES 108

DETERMINE THAT THERE IS SHOT CHANGE POSSIBILITY FOR HTH HIGHEST LAYER FRAME GROUP

110

DETERMINED THAT THERE IS NOT SHOT CHANGE POSSIBILITY FOR HTH HIGHEST LAYER FRAME GROUP

RETURN TO OPERATION 34

# FIG. 5

42

```
START
```

↓

CALCULATE FIRST DIFFERENTIAL
CHARACTERISTIC VALUE FOR
SECOND REFERENCE FRAMES ⎯ 130

↓

132

FIRST DIFFERENTIAL
CHARACTERISTIC VALUE > FIRST
THRESHOLD VALUE ?  ——— NO ———→

↓ YES

CALCULATE FIRST
CORRELATION COEFFICIENT FOR ⎯ 134
SECOND REFERENCE FRAMES

↓

136

FIRST
CORRELATION
COEFFICIENT < SECOND  ——— NO ———→
THRESHOLD VALUE ?

↓ YES

138

DETERMINE THAT THERE IS
SHOT CHANGE POSSIBILITY
FOR LTH UPPER LAYER
FRAME GROUP

140

DETERMINED THAT THERE
IS NOT SHOT CHANGE
POSSIBILITY FOR LTH UPPER
LAYER FRAME GROUP

↓

```
RETURN TO OPERATION 44
```

# FIG. 6

56

```
START
```

CALCULATE THIRD DIFFERENTIAL CHARACTERISTIC VALUE FOR PREDETERMINED FRAMES —150

152

THIRD DIFFERENTIAL CHARACTERISTIC VALUE > FIFTH THRESHOLD VALUE ?  —— NO

YES

CALCULATE THIRD CORRELATION COEFFICIENT FOR PREDETERMINED FRAMES — 154

156

SIXTH THRESHOLD VALUE < THIRD CORRELATION COEFFICIENT < SEVENTH THRESHOLD VALUE? —— NO

160

THIRD CORRELATION COEFFICIENT < SIXTH THRESHOLD VALUE ? —— NO

YES

YES

EXAMINE SHOT CHANGE POSSIBILITY BASED ON MOTION INFORMATION FOR LTH MIDDLE LAYER FRMAE GROUP — 158

DETERMINE THAT THERE IS SHOT CHANGE POSSIBILITY BASED ON NORMALIZED CORRELATION FOR NTH MIDDLE LAYER FRMAE GROUP — 162

DETERMINED THAT THERE IS NOT SHOT CHANGE POSSIBILITY FOR NTH MIDDLE LAYER FRAME GROUP

164

```
RETURN TO OPERATION 58
```

# FIG. 7

```
                    ┌─────────┐
                    │  START  │
                    └────┬────┘
                         │              158
                         │         ╱╲
                         ▼        ╱
                    ╱─────────╲  170
                   ╱   SECOND   ╲
                  ╱ PREDETERMINED ╲
                 ╱ FRAME OF NTH MIDDLE╲        NO
                ╲ LAYER FRAME GROUP IS ╱─────────────────┐
                 ╲  FIRST REFERENCE   ╱                  │
                  ╲     FRAME ?      ╱                    │
                   ╲───────┬───────╱                     │
                         │ YES                           │
                         ▼                               │
    ┌──────────────────────────────────────┐            │
    │ CALCULATE FIRST INCIDENCE PROPORTION  │── 172      │
    └───────────────────┬──────────────────┘            │
                         │                               │
                         ▼           174                 │
                   ╱───────────╲                         │
                  ╱    FIRST     ╲                        │
                 ╱ INCIDENCE PROPORTION >╲    YES         │
                ╲  EIGHTH THRESHOLD     ╱─────────────────┤
                 ╲     VALUE ?         ╱                  │
                  ╲─────────┬────────╱                    │
                         │ NO      176          178       │
                         ▼                        │       ▼
    ┌──────────────────────────────┐    ┌──────────────────────────────┐
    │  DETERMINE THAT THERE IS      │    │ DETERMINED THAT THERE IS     │
    │    NOT SHOT CHANGE            │    │  SHOT CHANGE POSSIBILITY     │
    │ POSSIBILITY FOR NTH MIDDLE    │    │  FOR NTH MIDDLE LAYER        │
    │   LAYER  FRAME GROUP          │    │     FRAME GROUP              │
    └───────────────┬──────────────┘    └───────────────┬──────────────┘
                    │                                    │
                    │◄───────────────────────────────────┘
                    ▼
            ┌──────────────────────────┐
            │  RETURN TO OPERATION 58  │
            └──────────────────────────┘
```

# FIG. 8

60

```
( START )
```

180

IS BIDIRECTIONAL
PREDICTION FRAME INCLUDED IN NTH
LOWER LAYER FRAME
GROUP?

NO

YES

182

IS
NTH MIDDLE
LAYER FRAME
GROUP DETERMINED TO HAVE
SHOT CHANGE POSSIBILITY BASED
ON MOTION
INFORMATION
?

NO

YES

184

DETERMINE WHETHER OR
NOT THERE IS CUT TYPE
CHANGE FRAME IN
BIDIRECTIONAL PREDICTION
FRAMES BASED ON
MOTION INFORMATION

186

DETERMINE WHETHER
OR NOT THERE IS CUT
TYPE CHANGE FRAME
IN BIDIRECTIONAL
PREDICTION FRAMES
BASED ON NORMALIZED
CORRELATION

188

DETERMINE
SECOND
PREDETERMINED
FRAME AS CUT
TYPE CHANGE
FRAME

( RETURN TO OPERATION 62 )

FIG. 9

184

START

DESIGNATE FIRST BIDIRECTIONAL PREDICTION FRAME — 200

CALCULATE SECOND AND THIRD INCIDENCE PROPORTIONS — 202

212

DESIGNATE NEXT BIDIRECTIONAL PREDICTION FRAME EXCEPT FOR FIRST BIDIRECTIONAL PREDICTION FRAME

204

SECOND INCIDENCE PROPORTION > NINTH THRESHOLD VALUE ? AND THIRD INCIDENCE PROPORTION < TENTH THRESHOLD VALUE?

NO

YES

206

DETERMINE FIRST BIDIRECTIONAL PREDICTION FRAME AS CUT TYPE CHANGE FRAME

208

IS LAST ONE OF BIDIRECTIONAL PREDICTION FRAMES ?

NO

YES

210

DETERMINE SECOND PREDETERMINED FRAME AS CUT TYPE CHANGE FRAME

RETURN TO OPERATION 62

# FIG. 10

186

```
        ( START )
            │
            ▼
┌─────────────────────────┐
│ DESIGNATE FIRST BIDIRECTIONAL │──── 220
│   PREDICTION FRAME      │
└─────────────────────────┘
            │
            ▼
┌─────────────────────────┐
│   CALCULATE FOURTH      │──── 222
│ CORRELATION COEFFICIENT │
└─────────────────────────┘
```

┌─────────────────────────────────┐
│ DESIGNATE NEXT BIDIRECTIONAL     │──── 232
│ PREDICTION FRAME EXCEPT FOR      │
│ FIRST BIDIRECTIONAL              │
│ PREDICTION FRAME                 │
└─────────────────────────────────┘

224

FOURTH CORRELATION COEFFICIENT < ELEVENTH THRESHOLD VALUE ?

NO

YES

226

┌─────────────────────────┐
│   DETERMINE FIRST       │
│ BIDIRECTIONAL PREDICTION │
│ FRAME AS CUT TYPE       │
│ CHANGE FRAME            │
└─────────────────────────┘

228

IS LAST ONE OF BIDIRECTIONAL PREDICTION FRAMES ?

NO

YES

230

┌────────────────────────────────┐
│ DETERMINE SECOND PREDETERMINED  │
│ FRAME AS CUT TYPE CHANGE FRAME  │
└────────────────────────────────┘

( RETURN TO OPERATION 62 )

FIG. 11

START — 300

DESIGNATE HTH HIGHEST LAYER FRAME GROUP — 302

EXAMINE SHOT CHANGE POSSIBILITY FOR HTH HIGHEST LAYER FRAME GROUP

304 — IS THERE SHOT CHANGE POSSIBILITY ? — NO

310 — YES

DESIGNATE (H+1)TH HIGHEST LAYER FRAME GROUP — 308

NO

306 — IS LAST ONE OF HIGHEST LAYER FRAME GROUPS? — YES

10B

DETECT FIRST AND SECOND LISTS — 336

EXAMINE WHETHER OR NOT THERE IS GRADUAL TYPE CHANGE — 338

RETURN TO OPERATION 12

DESIGNATE LTH UPPER LAYER FRAME GROUP

312 — EXAMINE SHOT CHANGE POSSIBILITY FOR LTH UPPER LAYER FRAME GROUP

DESIGNATE (L+1)TH UPPER LAYER FRAME GROUP

318 — NO — 316 — IS LAST ONE OF UPPER LAYER FRAME GROUPS ? — YES

314 — IS THERE SHOT CHANGE POSSIBILITY ? — NO

320 — YES — IS FIRST REFERENCE FRAME INCLUDED IN LTH UPPER LAYER FRAME GROUP ? — NO

DETERMINE SECOND REFERENCE FRAME OF LTH UPPER LAYER FRAME GROUP AS CUT TYPE CHANGE FRAME — 322 — YES

DESIGNATE (N+1)TH MIDDLE LAYER FRAME GROUP — 334

NO — 332

332 — IS LAST ONE OF MIDDLE LAYER FRAME GROUPS ? — YES

324 — YES

DESIGNATE NTH MIDDLE LAYER FRAME GROUP

330 — EXAMINE WHETHER OR NOT THERE IS CUT TYPE CHANGE IN Nth LOWER LAYER FRAME GROUP

EXAMINE SHOT CHANGE POSSIBILITY FOR NTH MIDDLE LAYER FRAME GROUP — 326 — NO

YES

328 — IS THERE SHOT CHANGE POSSIBILITY ?

FIG. 12

400

420

IN1 → | SHOT CHANGE EXAMINATION UNIT | → | SHOT CHANGE LIST GENERATING UNIT | → OUT1

FIG. 13

EP 1 571 595 A2

# FIG. 14

502

```
        600              602              604              606              608
         |                |                |                |                |

IN3 →  SECOND       →  THIRD       →   SECOND      →  FOURTH       →  SECOND SHOT    → OUT3
       DIFFERENTIAL     COMPARISON      CORRELATION     COMPARISON      CHANGE
       CHARACTERISTIC   UNIT            COEFFICIENT     UNIT            POSSIBILITY
       VALUE                            CALCULATION                     DETERMINATION
       CALCULATION                      UNIT                            UNIT
       UNIT
```

EP 1 571 595 A2

EP 1 571 595 A2

# FIG. 15

508

620

622

624

626

628

IN4 → | FIRST DIFFERENTIAL CHARACTERISTIC VALUE CALCULATION UNIT | → | FIRST COMPARISON UNIT | → | FIRST CORRELATION COEFFICIENT CALCULATION UNIT | → | SECOND COMPARISON UNIT | → | FIRST SHOT CHANGE POSSIBILITY DETERMINATION UNIT | → OUT4

## FIG. 16

518

IN5 → **THIRD DIFFERENTIAL CHARACTERISTIC VALUE CALCULATION UNIT** (640) → **FIFTH COMPARISON UNIT** (642) → **THIRD CORRELATION COEFFICIENT CALCULATION UNIT** (644) → **SIXTH COMPARISON UNIT** (646) → **FOURTH SHOT CHANGE POSSIBILITY EXAMINATION UNIT** (648) → OUT5

**THIRD SHOT CHANGE POSSIBILITY DETERMINATION UNIT** (650) → OUT6

EP 1 571 595 A2

## FIG. 17

648

IN6 → **FIRST SENSE UNIT** (700) → **FIRST INCIDENCE PROPORTION CALCULATION UNIT** (702) → **SEVENTH COMPARISON UNIT** (704) → **FOURTH SHOT CHANGE POSSIBILITY DETERMINATION UNIT** (706) → OUT7

# FIG. 18

520

800  802  804

IN7 → | SECOND SENSE UNIT | → | THIRD SENSE UNIT | → | SECOND CUT TYPE CHANGE FRAME DETERMINATION UNIT | → OUT8

FIG. 19

804A

IN8 → FIRST BIDIRECTIONAL PREDICTION FRAME DESIGNATION UNIT (900) → SECOND AND THIRD INCIDENCE PROPORTION CALCULATION UNIT (902) → EIGHTH COMPARISON UNIT (904) → FIRST DETERMINATION UNIT (906) → OUT9

FIRST END FRAME SENSE UNIT (908)

# FIG. 20

804B

IN9 →

| 920 | 922 | 924 | 926 |
|---|---|---|---|
| SECOND BIDIRECTIONAL PREDICTION FRAME DESIGNATION UNIT | FOURTH CORRELATION COEFFICIENT CALCULATION UNIT | NINTH COMPARISON UNIT | SECOND DETERMINATION UNIT |

→ OUT10

928

SECOND END FRAME SENSE UNIT

EP 1 571 595 A2

FIG. 21